# EUROPÄISCHE PATENTSCHRIFT

(11) **EP 0 977 644 B1**
(45) Veröffentlichungstag und Bekanntmachung des Hinweises auf die Patenterteilung: **03.04.2002**
(21) Anmeldenummer: 98925477.6
(22) Anmeldetag: 22.04.1998
(51) Int. Cl.: B23B 29/034

(54) **WERKZEUG SOWIE VERFAHREN ZUR BEARBEITUNG VON BOHRUNGEN MIT EINEM DERARTIGEN WERKZEUG**
TOOL AND METHOD FOR PROCESSING BORES
OUTIL ET METHODE D'USINAGE DE FORURES

(30) Priorität: 26.04.1997 DE 19717835
(43) Veröffentlichungstag der Anmeldung: 09.02.2000
(73) Patentinhaber: MAPAL Fabrik für Präzisionswerkzeuge Dr. Kress KG, D-73431 Aalen (DE)
(72) Erfinder: KURZ, Artur, D-73240 Wendlingen (DE)
(74) Vertreter: Gleiss, Alf-Olav, Dr.jur. Dipl.-Ing.
(86) Internationale Anmeldenummer: EP9802383
(87) Internationale Veröffentlichungsnummer: WO9848964

(56) Entgegenhaltungen:
- DE-A- 3 529 876
- US-A- 2 224 386
- US-A- 2 368 846
- US-A- 3 644 049

## Beschreibung

Die Erfindung betrifft ein Werkzeug nach dem Oberbegriff des Anspruches 1 sowie ein Verfahren zur Bearbeitung von Bohrungen mit einem derartigen Werkzeug nach Anspruch 34.

Die Fertigungstechnik ist in den letzten etwa hundert Jahren intensiver und weltweiter Entwicklung auf den heutigen Stand gebracht worden. In modernen Automobilwerken werden zum Beispiel Vier-Zylinder-Reihenmotorblöcke mit Taktzeiten unter einer Minute produziert. Die Bearbeitung erfolgt in Transferstraßen. Sie bestehen aus einer Vielzahl von hintereinandergereihten Bearbeitungsstationen (Dreh-, Bohr-, Fräsmaschinen und dergleichen), die durch eine automatische Werkstücktransporteinrichtung räumlich und zeitlich fest miteinander verkettet sind. Der Arbeitsfortschritt erfolgt getaktet. Sobald alle Bearbeitungseinheiten ihre jeweilige Aufgabe erfüllt haben, werden die Werkstücke um einen Taktweg zur nächsten Bearbeitungsstation weitergefördert.

Diese Verfahrensweise ermöglicht nur eine geringe Flexibilität, d.h. Anpaßbarkeit an andere Bearbeitungsaufgaben. Außerdem sind hohe Investitionskosten für die Transferstraße erforderlich, weshalb solche Anlagen nur in der Massen- und Großserienproduktion wirtschaftlich einsetzbar sind. Modellwechsel, Konstruktionsänderungen infolge technischer Verbesserungen oder Erweiterungen der Produktpalette sind kaum oder nur in beschränktem Umfang mit großem Aufwand meist nur unter Inanspruchnahme der jährlichen Werksferien möglich.

Gleichzeitig verlangt ein sich wandelndes Verbraucherverhalten mit häufigeren Modellwechseln und in vielen Fällen wenig gesicherten Aussagen über die zukünftig zu erwartende und planerisch frühzeitig einzukalkulierende Produktpolitik und die durch Kostendruck verursachte Verlagerung der Fertigung von den klassischen Industrieländern weg eine flexiblere Fertigungsweise mit kleineren Losgrößen bei möglichst niedrigen Gesamtkosten.

Diese Problematik wird im Prinzip durch den Einsatz flexibler Fertigungssysteme gelöst. Sie erfüllen die konträren Ziele von hoher Produktivität und Flexibilität. Über eine rechnergesteuerte Werkstücktransporteinrichtung sind mehrere einander ergänzende oder ersetzende NC-Maschinen, in der Regel Bearbeitungszentren, miteinander verknüpft.

Bei der Herstellung von Zylinderbohrungen in Motorblöcken muß eine hohe Qualität erzielt, d.h. mit sehr kleinen Maß-, Lage-, Form- und Oberflächentoleranzen gearbeitet werden. Das gewünschte Nennmaß der Zylinderbohrung ist mit dem Nennmaß der Schneidkante am Werkzeug in aller Regel nicht identisch, da durch die verschleißabhängige Schnittkraft Deformationen an Werkzeug und Werkstück entstehen, die Schnittstelle zwischen Maschine und Werkzeug geometrische Abweichungen aufweist und die Wiederholgenauigkeit der Werkzeugaufnahme begrenzt ist. Da alle Werkstoffe auf die maßerzeugende Schneidkante mehr oder weniger verschleißend wirken, wird mit der Anzahl der bearbeiteten Werkstücke der Ist-Durchmesser der Bohrungen immer kleiner. Die Feinbohrschneide muß darum spätestens bei Erreichen der unteren Maßtoleranzgröße, meist aus Gründen der statistischen Qualitätskontrolle, sehr viel früher nachjustiert werden.

Zur Feineinstellung und Schneidenverschleißkompensation sind Stelleinrichtungen für die Schneide vorgesehen. So wird am Werkzeug die Einstellung durch elastische Deformation von einfachen oder Parallelogramm-Biegebalken oder Membranen als gelenkige Verbindung zwischen den meist schwenkbaren Werkzeugen oder Werkzeugadaptern und der Maschinenspindel vorgesehen.

Es ist auch bekannt, die Einstellung mittels linearer Schlittenführungen aller Art mit im wesentlichen in radialer Richtung verstellbaren Werkzeugträgerschlitten vorzunehmen, zum Beispiel sogenannte Plandrehköpfe oder mittels ein- oder zweiarmiger Hebel oder Wippen oder Gelenken als Schneidenträger.

Die elastischen Systeme haben den Nachteil eines sehr begrenzten Verstellbereiches, unterschiedlicher Stellkräfte und damit nicht linearer Einflüsse sowie nur mäßig steifer, vibrationsempfindlicher Stellelemente.

Die Stelleinrichtungen mit Schlittenführungen beanspruchen viel Bauraum mit großen Außendurchmessern, hohem Gewicht und Trägheitsmoment und Problemen beim Auswuchten. Schlitten, Schlittenführung und Stellelement müssen spielfrei laufen oder weisen Laufspiel und Umkehrspiel auf und müssen nach dem Stellvorgang meist zusätzlich festgeklemmt werden.

Der Antrieb der Stelleinrichtung erfolgt durch gesteuerte Betätigung einer Stellstange in der Antriebsspindel, durch hydraulische oder pneumatische Stellkolben, durch innere Kühlmittel-, Hydrauliköl- oder durch Druckluftzuführung.

Der Erfindung liegt die Aufgabe zugrunde, das gattungsgemäße Werkzeug und das gattungsgemäße Verfahren so auszubilden, daß das Werkzeug sowohl auf Standard- als auch auf Sondermaschinen, vorzugsweise NC-gesteuerten Maschinen, eingesetzt werden kann und sich durch ein günstiges Preis/Leistungs-verhältnis, durch hohe Genauigkeit, durch Steifigkeit und Betriebssicherheit sowie durch kompakte Bauweise auszeichnet.

Diese Aufgabe wird beim gattungsgemäßen Werkzeug erfindungsgemäß mit den kennzeichnenden Merkmalen des Anspruches 1 und beim gattungsgemäßen Verfahren erfindungsgemäß mit den kennzeichnenden Merkmalen des Anspruches 35 gelöst.

Beim erfindungsgemäßen Werkzeug wird die Radialverstellung der Schneide durch das fliehkraftbetätigte Element eingeleitet. Somit kann über die Drehzahl des Werkzeuges sehr einfach der Schneidenträger verstellt und damit die auf ihm sitzende Schneide nachgestellt werden. Das erfindungsgemäße Werkzeug zeichnet sich durch einen konstruktiv einfachen Aufbau aus, so daß es preisgünstig hergestellt werden kann. Es läßt sich sowohl an Sondermaschinen als auch an Standardmaschinen einsetzen. Mit dem erfindungsgemäßen Werkzeug, das um seine Achse rotierend angetrieben wird, können beispielsweise Gehäuse im Maschinen- und Fahrzeugbau, insbesondere mehrzylindrige Motorblöcke und Zylinderköpfe für Verbrennungsmotoren, Kompressoren, Einspritzpumpen usw., hochgenau bearbeitet werden. Zylinderbohrungen können beim erfindungsgemäßen Verfahren in mindestens zwei, vorzugsweise in drei NC-Achsen bahngesteuert mit hoher Genauigkeit erzeugt werden. Infolge der erfindungsgemäßen Ausbildung ist eine hochgenaue Nachstellung der Schneide möglich, die im µ-Bereich liegt. Somit läßt sich ein Verschleiß der Schneide einfach und dennoch hochgenau kompensieren. Bei der am Schneidenträger vorgesehenen Schneide handelt es sich vorteilhaft um eine Schneide zur Fertigbearbeitung, so daß das Werkzeug nach der Fertigbearbeitung infolge der erfindungsgemäßen Ausbildung des Werkzeuges eine hohe Bearbeitungsgenauigkeit aufweist. Durch Anordnung weiterer Schneiden an demselben Werkzeugkörper können auch Zusatzbearbeitungen, zum Beispiel Anfasen, erfolgen oder der Fertigungsvorgang in Grob- und Feinbearbeitung aufgeteilt werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: im Axialschnitt ein erfindungsgemäßes Werkzeug, dessen nachstellbare Fertigschneide seine Endlage einnimmt, in der sie sich am Ende ihres Nachstellbereiches befindet,
- Fig. 2: das Werkzeug gemäß Fig. 1, dessen Fertigschneide von der Bohrungswandung abgehoben ist,
- Fig. 3: im Radialschnitt in zwei Ebenen ein Fliehkraftelement des Werkzeuges gemäß Fig. 1,
- Fig. 4: in vergrößerter Darstellung und im Radialschnitt eine zweite Ausführungsform eines Fliehkraftelementes des erfindungsgemäßen Werkzeuges,
- Fig. 5: im Axialschnitt eine zweite Ausführungsform eines erfindungsgemäßen Werkzeuges,
- Fig. 6: in schematischer Darstellung und in Achsansicht die Schneiden des Werkzeuges gemäß Fig. 1,
- Fig. 7: im Axialschnitt das Werkzeug gemäß Fig. 5 während der Bearbeitung,
- Fig. 8: in vergrößerter Darstellung und im Axialschnitt einen Teil einer Stellhülse des erfindungsgemäßen Werkzeuges,
- Fig. 9: in einer Darstellung entsprechend Fig. 8 die Stellhülse in axial verschobener und verriegelter Stellung,
- Fig. 10: eine Bearbeitungsmaschine mit erfindungsgemäßen Werkzeugen während der Bearbeitung eines Motorblockes,
- Fig. 10a: in schematischer Darstellung eine Draufsicht auf den Motorblock gemäß Fig. 10,
- Fig. 10b: eine Ansicht einer mehrspindeligen Bohrkassette der Bearbeitungsmaschine gemäß Fig. 10,
- Fig. 11: im Axialschnitt eine weitere Ausführungsform eines erfindungsgemäßen Werkzeuges,
- Fig. 12: in Axialansicht eine Verstelleinrichtung des Werkzeuges gemäß Fig. 11,
- Fig. 13: im Axialschnitt eine weitere Ausführungsform eines erfindungsgemäßen Werkzeuges,
- Fig. 14: in vergrößerter Darstellung und im Schnitt das Werkzeug gemäß Fig. 13 während der Bearbeitung der Bohrung in einem Werkstück,
- Fig. 15: in einer Darstellung entsprechend Fig. 14 das Werkzeug bei stehender Spindel und während des Meßvorganges.

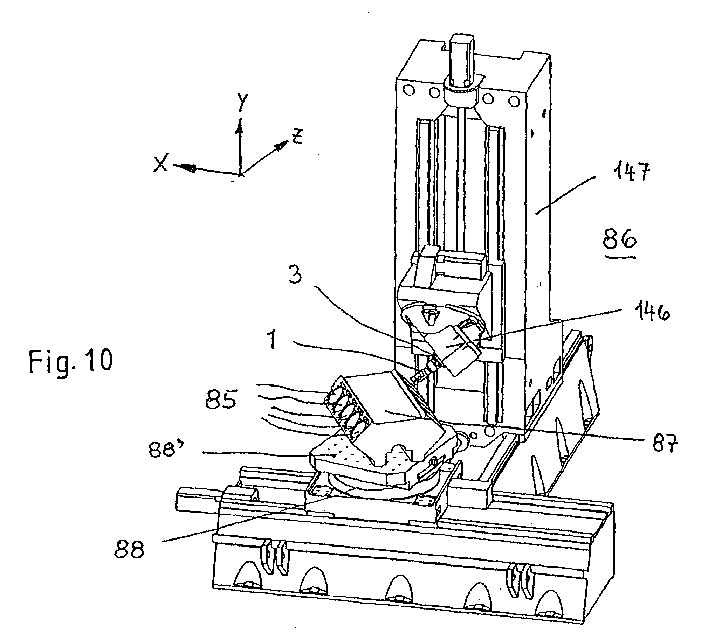

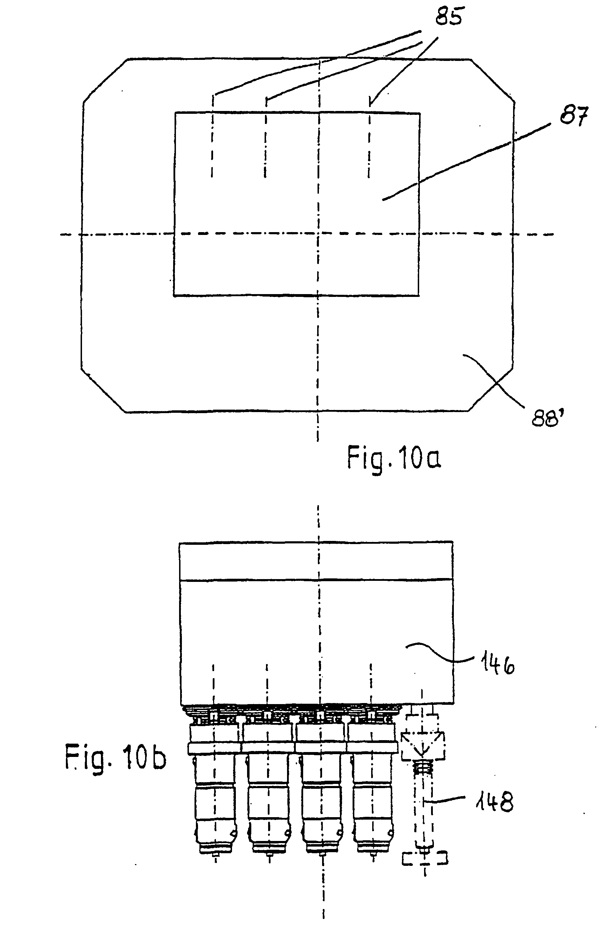

Das Werkzeug ist vorzugsweise ein Ausbohrwerkzeug, mit dem Zylinderbohrungen spanabhebend bearbeitet werden können. Das Werkzeug hat einen Grundkörper 1 mit einem endseitigen Anschlußflansch 2, mit dem das Werkzeug an eine Antriebsspindel 3 (Fig. 10) angeschlossen werden kann. Der Grundkörper 1 wird axial und zentral von einer Bohrung 4 durchsetzt, in der eine Stellstange 5 verschiebbar gelagert ist. Sie ist an einem Ende mit einem Kolben 6 versehen, der in einem Druckraum 7 liegt. Er ist in einem Verschlußteil 8 vorgesehen, mit dem die Bohrung 4 an einem Ende verschlossen wird. Das Verschlußteil 8 ist mit Schrauben 9 lösbar am Anschlußflansch 2 des Grundkörpers 1 befestigt. Die Stellstange 5 ragt abgedichtet durch einen Boden 10 des Verschlußteiles 8, das an der Innenwandung eines im Durchmesser vergrößerten Endabschnittes 11 der Bohrung 4 anliegt.

Die Stellstange 5 durchsetzt den Grundkörper 1 auf der gesamten Länge und weist an seinem vom Anschlußflansch 2 abgewandten, außerhalb des Grundkörpers 1 liegenden Ende ein Betätigungsglied 12 auf, mit dem eine Schneide 13 des Werkzeuges in noch zu beschreibender Weise radial verstellt werden kann, um sie einzustellen und bei Verschleiß nachzustellen bzw. zurückzustellen, wenn das Nachstellende erreicht ist. Das Betätigungsglied 12 kann von Hand oder durch Drehen einer entsprechenden Vorrichtung oder durch Spindeldrehung so verdreht werden, daß die Schneide 13 nachgestellt oder zum Anfang des Nachstellbereiches radial zurückgefahren wird.

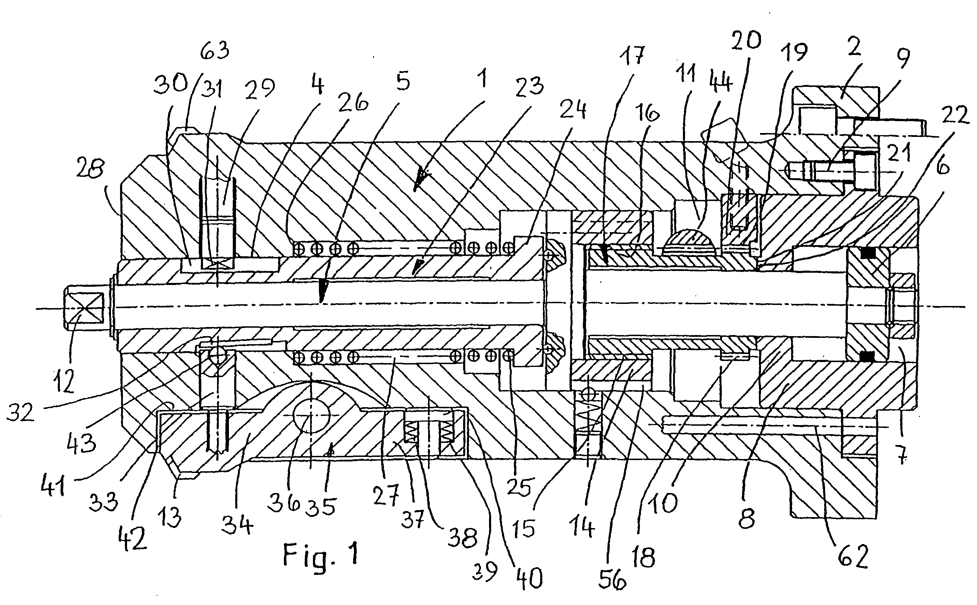

Auf der Stellstange 5 sitzt eine Spindelmutter 14, die innenseitig mit einem Schraubgewinde 15 versehen ist. In das Schraubgewinde 15 greift ein Schraubgewinde 16 einer Stellspindel 17 ein, die auf der Stellstange 5 sitzt. Mit axialem Abstand vom Schraubgewinde 16 ist die Stellspindel 17 mit einer umlaufenden Verzahnung 18 versehen, in die in der in Fig. 1 dargestellten Endlage eine Gegenverzahnung 19 eines Drehsicherungselementes 20 eingreift. Es ist drehfest mit dem Grundkörper 1 verbunden. Es liegt an der Innenwandung des Endabschnittes 11 der Bohrung 4 an. Vorteilhaft ist das Drehsicherungselement 20 lösbar mit dem Grundkörper 1 verbunden.

Die Stellspindel 17 hat nahezu über ihre gesamte Länge Abstand von der Stellstange 5. Lediglich in Höhe der Verzahnung 18 liegt die Stellspindel 17 an der Stellstange 5 an. In der in Fig. 1 dargestellten Endlage liegt die Stellspindel 17 mit einer Stirnfläche 21 am Boden 10 des Verschlußteiles 8 an. Vorteilhaft ist der Boden 10 auf seiner der Stellspindel 17 zugewandten Seite mit einem Vorsprung 22 versehen, an dessen ebener Stirnseite die Stellspindel 17 anliegt.

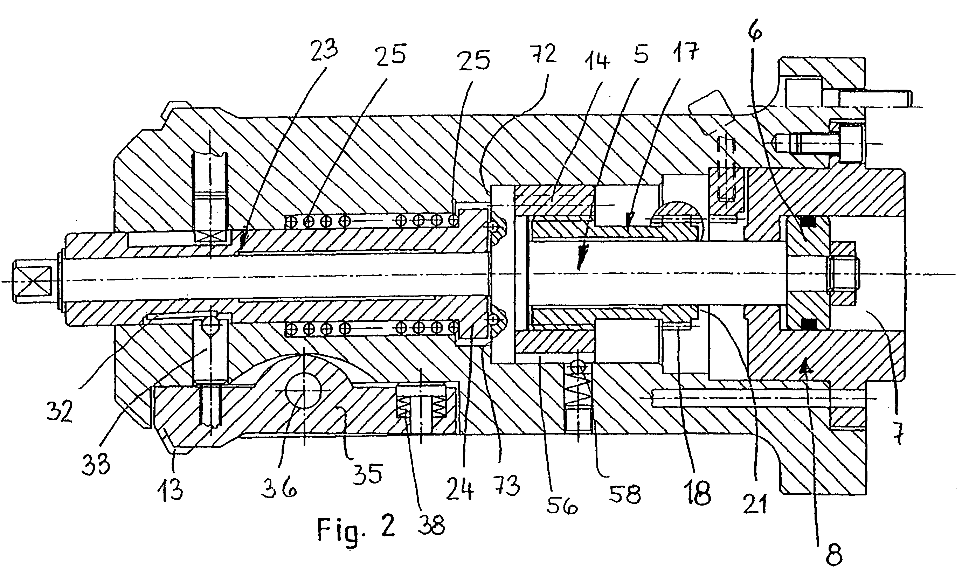

Auf der von der Stellspindel 17 abgewandten Seite der Spindelmutter 14 sitzt auf der Stellstange 5 mit ihr gemeinsam axial verschiebbar eine Stellhülse 23, die an ihrem der Spindelmutter 14 zugewandten Ende mit einem radial nach außen gerichteten Flansch 24 versehen ist. Mit ihm liegt die Stellhülse 23 unter der Kraft wenigstens einer Druckfeder 25 an einem Flansch der Stellstange 5 an. Die Druckfeder 25 stützt sich mit einem Ende am Flansch 24 und mit ihrem anderen Ende an einem radialen Boden 26 einer ringförmigen Vertiefung 27 in der Wandung der Bohrung 4 ab. Im Bereich vom Boden 26 der Vertiefung 27 bis zur Stirnseite 28 des Grundkörpers 1 liegt die Stellhülse 23 an der Wandung der Bohrung 4 an. Der axiale Verschiebeweg der Stellstange 5 und somit auch der Stellhülse 23 wird durch wenigstens einen Anschlag 72 (Fig. 2) begrenzt, der im Grundkörper 1 angeordnet ist. Ein in eine Nut 30 der Stellhülse 23 eingreifendes Teil 31 eines Drehsicherungselementes 29 wird vorteilhaft durch eine Rolle gebildet, um die Reibung beim Verschieben der Stellhülse 23 gering zu halten. Das Drehsicherungselement 29 sichert die Stellhülse 23 gegen Verdrehen gegenüber dem Grundkörper 1.

Die Stellhülse 23 ist an der Außenseite mit einer Steuerschräge 32 versehen, die in Richtung auf die Spindelmutter 14 der Stellstange 5 radial schräg nach innen verläuft. An der Steuerschräge 32 stützt sich ein Druckstück 33 ab, das im Grundkörper 1 radial verschiebbar gelagert ist und an dem unter Druckkraft ein Arm 34 einer Wippe 35 anliegt. Sie ist als zweiarmiger Hebel ausgebildet und um eine senkrecht zur Achse der Stellstange 5 liegende Achse 36 schwenkbar im Grundkörper 1 gelagert. Der andere Arm 37 der Wippe 35 wird druckbeaufschlagt, im Ausführungsbeispiel durch ein Tellerfederpaket 38. Es ist in einer Vertiefung 39 des Wippenarmes 37 untergebracht. Das Tellerfederpaket 38 stützt sich am Boden der Vertiefung 39 sowie an einem Gegenhalter 40 ab, der unter der Kraft des Tellerfederpaketes am Boden 41 einer am Umfang des Grundkörpers 1 vorgesehenen Vertiefung 42 anliegt, welche die Wippe 35 aufnimmt. Das Druckstück 33 liegt vorteilhaft mit einer Kugel 43 an der Steuerschräge 32 an. Am Wippenarm 34 ist die nachstellbare Schneide 13 vorgesehen.

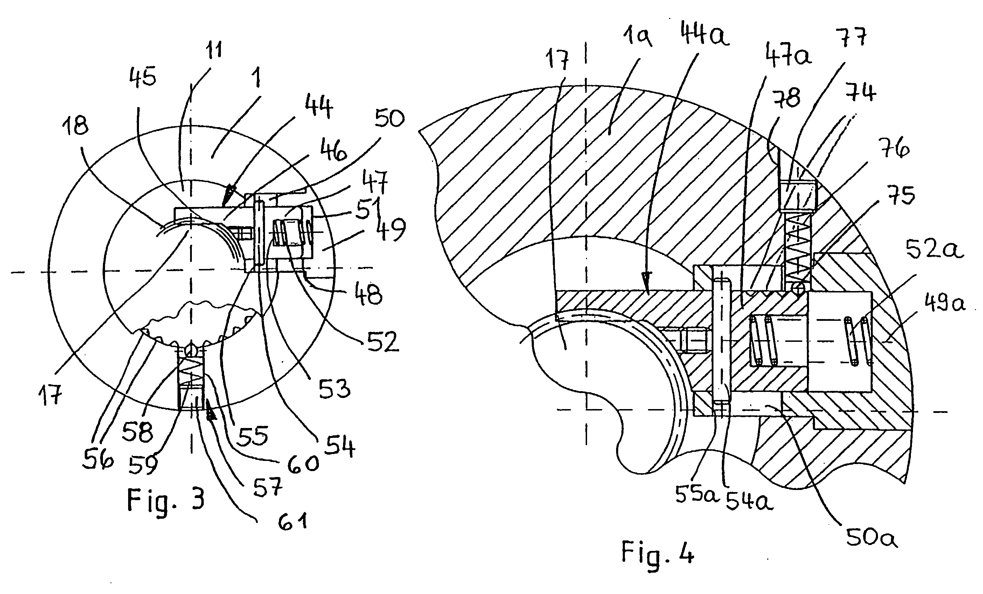

Im Bereich zwischen der Spindelmutter 14 und der Verzahnung 18 der Stellspindel 17 ist im Grundkörper 1 ein Fliehkraftelement 44 verschiebbar gelagert. Bei stillstehendem Werkzeug wird das Fliehkraftelement 44 unter Druckkraft radial nach innen belastet. Wie Fig. 3 zeigt, weist das Fliehkraftelement 44 eine Verzahnung 45 auf, die mit der Verzahnung 18 der Stellspindel 17 zusammenwirken kann. Das Fliehkraftelement 44 ragt mit einem die Verzahnung 45 aufweisenden Teil 46 in den Endabschnitt 11 der Bohrung 4. Der Verzahnungsteil 46 geht in einen Hülsenteil 47 über, der in eine Vertiefung 48 eines Verschlußteiles 49 ragt. Am Boden 51 der Vertiefung 48 des Verschlußteiles 49 stützt sich eine Druckfeder 52 ab, mit der das Fliehkraftelement 44 radial nach innen belastet wird. Die Druckfeder 52 stützt sich außerdem am Boden 53 des Fliehkraftelementes 44 ab. Solange das Werkzeug nicht dreht, wird das Fliehkraftelement 44 durch die Kraft der Druckfeder 52 radial nach innen belastet, bis es mit einem Anschlag 54, vorzugsweise einem das Fliehkraftelement durchsetzenden Querbolzen, am Boden 55 einer Nut 50 des Verschlußteiles 49 anliegt. Der Verzahnungsteil 45 des Fliehkraftelementes 44 ragt durch den Boden 55 der Nut 50.

Außenseitig ist die Spindelmutter 14 mit Rastvertiefungen 56 versehen (Fig. 3), die vorteilhaft gleichmäßig verteilt über den Umfang der Spindelmutter 14 vorgesehen sind und sich über die axiale Länge der Spindelmutter erstrecken (Fig. 1). Die Rastvertiefungen 56 sind Teil einer Verdrehsicherung 57, mit der ein ungewolltes Verdrehen der Spindelmutter 14 und damit der Stellstange 5 verhindert wird. in eine der Rastvertiefungen 56 greift ein vorteilhaft als Kugel ausgebildetes Rastelement 58 ein, das unter der Kraft wenigstens einer Druckfeder 59 steht. Sie ist in einer Radialbohrung 60 des Grundkörpers 1 untergebracht, die durch einen Gewindestift 61 geschlossen wird, an der sich die Druckfeder 59 abstützt.

Im folgenden wird eine Maschine mit nur einer NC-Achse (Z-Achse) als Sondermaschine bezeichnet. Das Werkzeug gemäß Fig. 1 ist für Sondermaschinen vorgesehen und wird mit seinem Anschlußflansch 2 (Fig. 1) an die Antriebsspindel angeschlossen. In der Darstellung gemäß Fig. 1 befindet sich die Schneide 13 am Ende des Nachstellbereiches in Bearbeitungsstellung, d.h. sie ist radial maximal zugestellt. Die Verzahnung 18 der Stellspindel 17 ist in Eingriff mit dem Drehsicherungselement 20. Die Stellhülse 23 liegt mit ihrem Flansch 24 unter der Kraft der Druckfeder 25 an der Spindelmutter 14 der Stellstange 5 an. Bei der spanabhebenden Bearbeitung dreht das Werkzeug mit der Drehzahl n_{Bearbeitung}. Auf das Fliehkraftelement 44 wird dadurch eine Fliehkraft ausgeübt, die dazu führt, daß das Fliehkraftelement 44 gegen die Kraft der Druckfeder 52 bis zur Anlage am Boden 51 der Vertiefung 48 zur Anlage kommt. Diese radiale Verschiebung des Fliehkraftelementes 44 ist ohne Einfluß auf die Stellspindel 17, da sich das Fliehkraftelement 44, wie Fig. 1 zeigt, in einem zahnfreien Bereich der Stellspindel 14 zwischen der Spindelmutter 14 und der Verzahnung 18 befindet. Während der spanabhebenden Bearbeitung strömt Kühlmittel durch eine Kühlmittelbohrung 62 im Grundkörper 1 in den Arbeitsbereich des Werkzeuges.

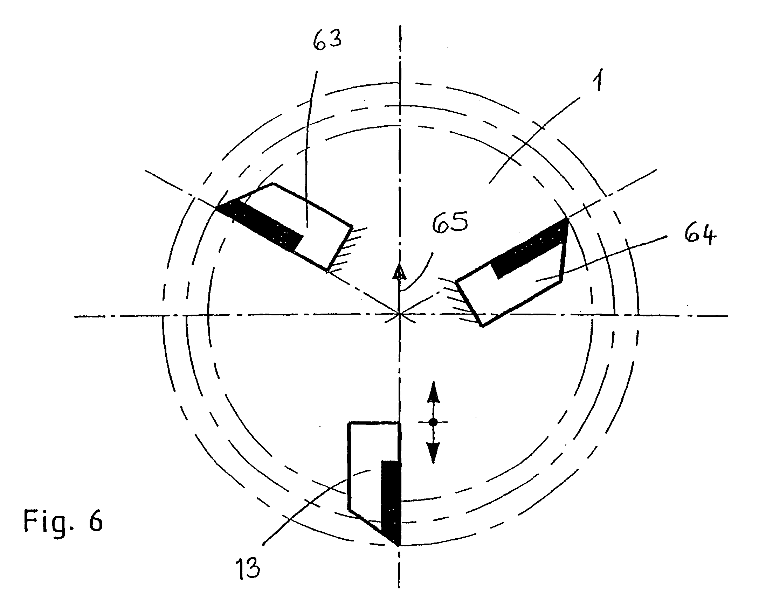

Das Werkzeug hat beispielsweise drei Schneiden (Fig. 6), von denen die an der Wippe 35 vorgesehene Schneide 13 radial nachstellbar ist. Die beiden anderen Schneiden 63 und 64 sind starr am Grundkörper 1 befestigt. Die festen Schneiden 63, 64 sind für den Halbfertigschnitt vorgesehen, während die Schneide 13 zum Fertigschneiden herangezogen wird. Die drei Schneiden 13, 63, 64 sind in Winkelabständen von beispielsweise 120° zueinander angeordnet. Außerdem sind die Schneiden axial versetzt zueinander vorgesehen. Die Schneiden haben unterschiedliche Arbeitsdurchmesser, die in Fig. 6 durch gestrichelte Linien angegeben sind. Die Schneide 64 hat den kleinsten Arbeitsdurchmesser. Die in Achsrichtung nachfolgende Schneide 63 hat einen größeren Arbeitsdurchmesser. Die nachstellbare Schneide 13, die in bezug auf die Schneide 63 axial versetzt angeordnet ist, hat schließlich den größten Arbeitsdurchmesser. Mit ihr wird die fertige Bohrung hergestellt. Damit das Werkzeug nach der Fertigbearbeitung aus der bearbeiteten Werkstückbohrung herausgefahren werden kann, wird das Werkzeug in Pfeilrichtung 65 in Fig. 6 mit der Maschinenachse so weit verfahren, daß alle drei Schneiden 13, 63, 64 Abstand von der Bohrungswandung haben. Dann kann das Werkzeug axial berührungsfrei aus der Bohrung herausgefahren werden.

Während des Bearbeitens tritt an der Schneide 13 Verschleiß auf, der zu einer Verringerung des Fertigdurchmessers der Bohrung führt. Aus diesem Grunde wird die Schneide 13 entsprechend ihrem Verschleiß so nachgestellt, daß der gewünschte Fertigdurchmesser der Bohrung erreicht wird. Zum Nachstellen der Schneide 13 wird die Antriebsspindel und damit das Werkzeug stillgesetzt. Da dann auf das Fliehkraftelement 44 keine Fliehkraft mehr wirkt, wird es durch die Druckfeder 52 (Fig. 3) in die in Fig. 3 dargestellte Lage radial nach innen geschoben.

Der auf der Stellstange 5 sitzende Kolben 6 wird mit separatem Druckmittel mit Druck beaufschlagt, wodurch die Stellstange 5 gegen die Kraft der Druckfeder 25 axial verschoben wird (Fig. 2). Der Verschiebeweg der Stellstange 5 wird durch eine radial nach innen ragende ringförmige Schulterfläche 72 begrenzt, an der die Spindelmutter 14 der Stellstange 5 mit ihrer Unterseite 73 zur Anlage kommt. Da die auf der Stellstange 5 sitzende Stellspindel 17 mit ihrem Schraubgewinde 16 in Eingriff mit dem Schraubgewinde 15 der Spindelmutter 14 ist, wird bei dieser Verschiebebewegung der Stellstange 5 die Stellspindel 17 mitgenommen. Das Rastelement 58 gleitet hierbei in der entsprechenden Rastvertiefung 56 an der Außenseite der Spindelmutter 14. Beim Verschieben der Stellspindel 17 gelangt deren Verzahnung 18 in Eingriff mit der Verzahnung 45 des Fliehkraftelementes 44.

Sobald die Stellung gemäß Fig. 2 erreicht ist, wird die Antriebsspindel und damit das Werkzeug in Drehung versetzt. Die Drehzahl n₁ ist kleiner oder gleich der Drehzahl n_{Bearbeitung} während der Bearbeitung des Werkstückes. Infolge des Eingriffes des Fliehkraftelementes 44 in die Stellspindel 17 wird bei dieser Radialverschiebung des Fliehkraftelementes 44 die Stellspindel 17 um ihre Achse gedreht. Da die Stellspindel 17 mit ihrem Schraubgewinde 16 in Eingriff mit dem Schraubgewinde 15 der Spindelmutter 14 ist, verändert sich beim Drehen der Stellspindel 17 die relative Lage zwischen ihr und der Stellstange 5. Dies hat zur Folge, daß sich der Abstand zwischen der dem Kolben 6 zugewandten Stirnseite 21 der Stellspindel 17 und der Steuerschräge 32 verändert. Da die Schneide 13 infolge Verschleißes nachgestellt werden soll, wird dieser Abstand verkleinert. Aufgrund der Axialverschiebung der Stellstange 5 und damit der Stellhülse 23 liegt das Druckstück 33 an einer radial verhältnismäßig tief liegenden Stelle der Steuerschräge 32 an (Fig. 2). Die Schneide 13 ist darum verhältnismäßig weit radial innen angeordnet.

Nach dieser fliehkraftgesteuerten selbsttätigen Verstellung der Schneide 13 bzw. der Wippe 35 wird die Zufuhr des Druckmittels in den Druckraum 7 beendet und anschließend die Antriebsspindel stillgesetzt, so daß das Werkzeug nicht mehr dreht. Unter der Kraft der Druckfeder 25 wird die Stellhülse 23 zurückgeschoben, die über ihren Flansch 24 die Stellstange 5 mitnimmt. Da die Stellspindel 17 über die Schraubgewinde 15, 16 mit der Spindelmutter 14 der Stellstange 5 verbunden ist, wird die Stellspindel 17 ohne Änderung der Relativlage zwischen ihr und der Stellstange 5 ebenfalls axial zurückgeschoben. Die Verzahnung 18 der Stellspindel 17 gelangt dann wieder in Eingriff mit der Gegenverzahnung 19 des Drehsicherungselementes 20 (Fig. 1). Die Stellstange 5 wird so weit zurückgeschoben, bis die Stirnseite 21 der Stellspindel 17 am Vorsprung 22 des Verschlußteiles 8 anschlägt. Hierbei wird die Wippe 35 über das Druckstück 33 um die Achse 36 im Gegenuhrzeigersinn geschwenkt. Aufgrund der beschriebenen Abstandsverringerung zwischen der Stirnseite 21 der Stellspindel 17 und der Steuerschräge 32 wird die Schneide 13 auf einen größeren Durchmesser eingestellt und damit der eingetretene Schneidenverschleiß kompensiert.

Der Gegenhalter 40 (Fig. 1), an dem sich das Tellerfederpaket 38 abstützt, ist vorteilhaft lösbar am Boden 41 der Vertiefung 42 befestigt, in welcher die Wippe 35 untergebracht ist. Die Wippe 35 bewegt sich bei ihrer Schwenkbewegung somit relativ zum Gegenhalter 40. Das Tellerfederpaket 38 sorgt dafür, daß das Druckstück 33 stets unter ausreichender Kraft an der Steuerschräge 32 anliegt, auch wenn die Schneide 13 nicht in Eingriff mit dem zu bearbeitenden Werkstück ist.

Der Nachstellbereich der Schneide 13 kann mehrere Zehntel Millimeter betragen. Die fliehkraftgesteuerte Nachstellung der Schneide 13 ist so feinfühlig, daß Nachstellschritte von 1 µ möglich sind.

In den Druckraum 7 mündet eine (nicht dargestellte) Entlastungsbohrung, die dafür sorgt, daß beim Zurückschieben der Stellstange 5 das im Druckraum befindliche Druckmedium durch den Kolben 6 wieder verdrängt werden kann. Während der Nachstellung der Schneide 13 ist diese Entlastungsbohrung verschlossen, so daß sich im Druckraum 7 der erforderliche Druck zum Verschieben der Stellstange 5 aufbauen kann. Während der spanabhebenden Bearbeitung, d.h. bei der Drehzahl n_{Bearbeitung} des Werkzeuges, ist die Entlastungsbohrung geöffnet.

Das Fliehkraftelement 44 wird zur Nachstellung der Schneide 13 jeweils so weit verschoben, bis sein Hülsenteil 47 am Boden 51 der Vertiefung 48 (Fig. 3) zur Anlage kommt. Dieser Verstellweg ist so gewählt, daß die Stellspindel 17 genau um einen Zahn ihrer Verzahnung 18 weitergedreht wird. Dieser Verdrehweg entspricht einem vorgegebenen Nachstellweg der Schneide 13.

Im Ausführungsbeispiel nach den Fig. 1 bis 3 ist jeweils nur ein Nachstellschritt pro Radialverschiebung des Fliehkraftelementes 44 möglich. Es ist selbstverständlich möglich, das Werkzeug so auszubilden, daß die Schneide 13 unterschiedlich weit nachgestellt werden kann. Hierzu wird das Werkzeug mit unterschiedlichen Verstelldrehzahlen gedreht, so daß in Abhängigkeit von der Drehzahl das Fliehkraftelement 44 unterschiedlich radial weit nach außen verstellt wird. Dadurch ergeben sich unterschiedliche Drehwege der Stellspindel 17 und damit unterschiedliche Nachstellwege der Schneide 13. Ein solches Ausführungsbeispiel zeigt Fig. 4.

Der Hülsenteil 47a des Fliehkraftelementes 44a ist außenseitig mit Rastvertiefungen 74 versehen, in die ein Rastelement 75, vorzugsweise eine Rastkugel, unter Druckkraft, vorzugsweise unter der Kraft wenigstens einer Druckfeder 76, einrastet. Die Zahl der Rastvertiefungen 74 bestimmt die Zahl der möglichen Nachstellschritte für die Schneide 13. Fig. 4 zeigt die Ausgangsstellung des Fliehkraftelementes 44a, in der das Rastelement 75 in die von der Stellspindel 17 radial am weitesten entfernte Rastvertiefung 74 eingreift. Wird nach Druckbeaufschlagung der Stellstange 5 in der beschriebenen Weise das Werkzeug mit einer Drehzahl gedreht, die kleiner als die Bearbeitungsdrehzahl n_{Bearbeitung} ist, wird das Fliehkraftelement 44 so weit radial nach außen gegen die Kraft der Druckfeder 52a verschoben, bis das Rastelement 75 in die nächste Rastvertiefung 74 einrastet. Auf diese Weise kann durch Abstufung der jeweiligen Drehzahlen der Verschiebeweg des Fliehkraftelementes 44a unters chiedlich eingestellt werden.

Wie beim vorigen Ausführungsbeispiel liegt der Anschlag 54a bei Stillstand des Werkzeuges am Boden 55a der Vertiefung 50a des Verschlußteiles 49a an. Die das Rastelement 75 belastende Druckfeder 76 stützt sich an einem Gewindestift 77 ab, der in eine Gewindebohrung 78 des Grundkörpers 1a geschraubt ist. Im übrigen ist das Werkzeug gemäß Fig. 4 gleich ausgebildet wie die vorige Ausführungsform. Auch die Nachstellung der Schneide 13 erfolgt, bis auf die beschriebenen Unterschiede, in gleicher Weise wie beim vorigen Ausführungsbeispiel.

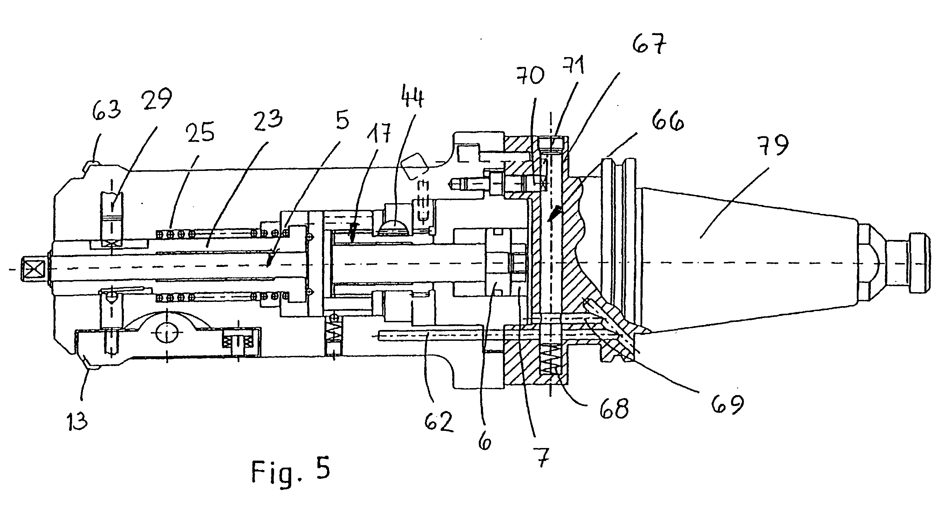

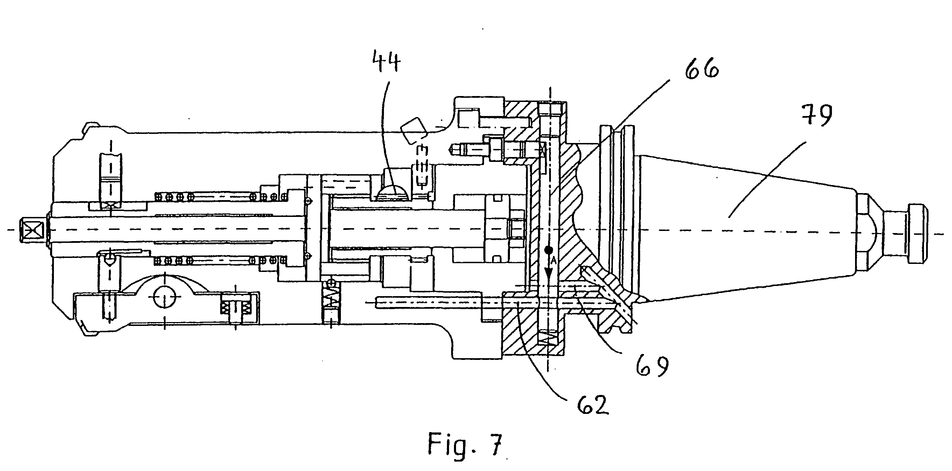

Das Werkzeug gemäß den Fig. 5 und 7 ist mit einem Einspannkegel 79 versehen, mit dem es mit der Antriebsspindel 3 eines Bearbeitungszentrums mit automatischem Werkzeugwechsel verbunden werden kann. Der Einspannkegel 79 kann ein Steilkegel, ein Hohlschaftkegel oder dergleichen sein. Beim Ausführungsbeispiel nach den Fig. 1 bis 3 hat das Werkzeug einen solchen Einspannkegel nicht. Darum ist das Werkzeug nach den Fig. 1 bis 3 infolge des fehlenden Einspannkegels 79 vorzugsweise für Sondermaschinen vorgesehen, bei denen das Werkzeug über den Anschlußflansch 2 unmittelbar an der Antriebsspindel befestigt wird.

Im Unterschied zur Ausführungsform nach den Fig. 1 bis 3 hat das Werkzeug gemäß den Fig. 5 und 7 das zweite Fliehkraftelement 66 in Form eines Schiebers, der in einer Querbohrung 67 des Werkzeuges gegen die Kraft wenigstens einer Druckfeder 68 verschiebbar untergebracht ist. Die Querbohrung 67 liegt senkrecht zur Achse des Werkzeuges. Der Schieber 66 dient dazu, die Kühlmittelbohrung 62 und eine Druckmittelbohrung 69 wechselseitig zu öffnen bzw. zu schließen. Der Schieber 66 ist so ausgebildet, daß er während der Bearbeitung des Werkstückes unter Fliehkraft gegen die Kraft der Druckfeder 68 verschoben wird. Dann ist die Druckmittelbohrung 69 durch den Schieber 66 geschlossen (Fig. 7), während die Kühlmittelbohrung 62 geöffnet wird. Steht das Werkzeug still, dann wird der Schieber 66 durch die Druckfeder 68 in die in Fig. 5 dargestellte Lage verschoben, in welcher die Kühlmittelbohrung 62 geschlossen und die Druckmittelbohrung 69 geöffnet wird. Der Verschiebeweg des Schiebers 66 wird durch einen Anschlag 70 begrenzt, der vorzugsweise gleich ausgebildet ist wie der Anschlag 29, mit dem der Verschiebeweg der Stellhülse 23 begrenzt wird. Der Anschlag 70 greift in eine in Achsrichtung verlaufende Nut 71 des Schiebers 66 ein. Während der Werkstückbearbeitung nimmt der Schieber 66 die in Fig. 7 dargestellte Lage ein. Sobald das Werkzeug stillgesetzt wird, wird der Schieber 66 durch die Druckfeder 68 in die in Fig. 5 dargestellte Lage verschoben. Das Druckmittel, vorzugsweise das Kühlmittel, wird dann über die Druckmittelbohrung 69 in den Druckraum 7 geführt.

Der auf der Stellstange 5 sitzende Kolben 6 wird dementsprechend mit Druck beaufschlagt, wodurch die Stellstange 5 gegen die Kraft der Druckfeder 25 axial verschoben wird. Wie anhand der Fig. 1 bis 3 erläutert worden ist, wird nach der Druckbeaufschlagung das Werkzeug mit der Drehzahl n₁ drehbar angetrieben, wodurch die fliehkraftgesteuerte Nachstellung der Schneide 13 vorgenommen wird. Die Drehzahl n₁ ist so gewählt, daß lediglich das Fliehkraftelement 44 unter Fliehkraftwirkung gegen die Kraft der Druckfeder 52 (Fig. 3) radial nach außen verschoben wird. Die Drehzahl n₁ zur Relätivverstellung zwischen Stellspindel 17 und Stellstange 5 ist so klein bzw. der Schieber 66 ist so ausgelegt, daß die bei dieser geringen Drehzahl n₁ des Werkzeuges auftretende Fliehkraft nicht ausreicht, den Schieber 66 aus der Stellung gemäß Fig. 5 zu verschieben. Erst bei der Arbeitsdrehzahl n_{Bearbeitung} reicht die Fliehkraft aus, um den Schieber 66 aus der Lage gemäß Fig. 5 in die in Fig. 7 dargestellte Lage zu verschieben, in welcher er die Druckmittelbohrung 69 verschließt und die Kühlmittelbohrung 62 freigibt. Während der Nachstellung der Schneide 13 wird die in den Druckraum 7 mündende Entlastungsbohrung durch den Schieber 66 verschlossen, so daß sich im Druckraum 7 der erforderliche Druck zum Verschieben der Stellstange 5 aufbauen kann. Während der spanabhebenden Bearbeitung, d.h. bei der Drehzahl n_{Bearbeltung} des Werkstückes, ist der Schieber 66 durch Fliehkraft radial so verschoben, daß die Entlastungsbohrung geöffnet ist.

Der,Schieber 66 ist so ausgelegt, daß er bei einer Drehzahl n₃ des Werkzeuges in Richtung des Pfeiles A in Fig. 7 verschoben wird. Diese Drehzahl n₃ ist kleiner oder gleich der Arbeitsdrehzahl n_{Bearbeltung} des Werkzeuges. Die Drehzahl n₃ wiederum ist größer als die Drehzahl n₁, bei der das Fliehkraftelement 44 in der beschriebenen Weise radial nach außen verschoben wird.

Auch bei der Ausführungsform gemäß den Fig. 5 und 7 kann das Fliehkraftelement 44 entsprechend der Ausführungsform nach Fig. 4 ausgebildet sein. Dann kann auch beim Werkzeug nach den Fig. 5 und 7 das Fliehkraftelement 44 stufenweise verstellt werden, so daß für die Schneide 13 mehrere Nachstellschritte möglich sind. Die hierfür jeweils erforderlichen Drehzahlen sind kleiner als die Drehzahl n₃ zum Verstellen des Schiebers 66 sowie kleiner als die Arbeitsdrehzahl n_{Bearbeitung}. Es gilt demnach hinsichtlich der verschiedenen Drehzahlen folgende Bedingung: n₁ < n₃ < n_{Bearbeitung}.

Die beschriebenen Werkzeuge können an den unterschiedlichsten Maschinen eingesetzt werden. Zur Nachstellung der Schneide 13 ist eine zusätzliche Achse nicht erforderlich. Darum können die beschriebenen Werkzeuge beispielsweise an Bearbeitungszentren eingesetzt werden, bei denen eine zusätzliche koaxiale Achse nicht vorhanden oder zum Beispiel infolge einer Werkzeugeinzugsvorrichtung nicht möglich ist. Da die Stellstange 5 an ihrem außerhalb des Werkzeuges liegenden Ende mit dem Betätigungsglied 12 versehen ist, können die Werkzeuge auch bei solchen Maschinen verwendet werden, die eine Druckmittelzuführung nicht aufweisen. In diesem Falle wird die Nachstellung der Schneide 13 durch eine an einer Vorrichtung oder an der Maschine vorgesehene Mitnahmevorrichtung für das Betätigungsglied 12 unter gezielter Drehung der Stellstange 5 schrittweise vorgenommen. Bei dieser Art der Nachstellung steht das Werkzeug still, so daß die Stellspindel 17 in Eingriff mit dem Drehsicherungselement 20 ist. Wird die Stellstange 5 von Hand um ihre Achse gedreht, bleibt die Stellspindel 17 stehen. Über die ineinandergreifenden Schraubgewinde 15, 16 werden die Stellstange 5 und die Stellspindel 17 relativ zueinander axial verschoben, d,h. der Abstand zwischen der Stirnseite 21 der Stellspindel 17 und der Steuerschräge 32 wird geändert. Es liegen dann die gleichen Verhältnisse vor wie nach der Druckbeaufschlagung des Kolbens 6 und nach dem Drehen der Stellspindel 17 durch das Fliehkraftelement 44.

Die beschriebenen Werkzeuge nach den Fig. 1 bis 7 lassen sich beispielsweise in einem Zweistufenverfahren einsetzen. Beim Niedergang wird mit den am Werkzeug vorgesehenen ortsfesten Schneiden 63, 64 (Fig. 6) eine Halbfertigbearbeitung am Werkstück vorgenommen. Beim Rückhub des Werkzeuges wird mit der verstellbaren Schneide 13 am Werkstück die Feinbearbeitung vorgenommen. Beim Niedergang für die Halbfertigbearbeitung wird der Druckraum 7 unter Druck gesetzt, so daß die Stellstange 5 in der beschriebenen Weise auf Anschlag gefahren ist (Fig. 2). Dann befindet sich die Steuerschräge 32 in einer solchen Stellung relativ zum Druckstück 33, daß die Schneide 13 am weitesten radial nach innen verstellt ist. Dann ist sie auf jeden Fall von der Bohrungswandung abgehoben.

Ist die Werkstückbohrung mit den ortsfesten Schneiden 63, 64 halbfertig bearbeitet, wird der Druckraum 7 entlastet, so daß die Stellstange 5 unter der Kraft der Druckfeder 25 aus der Lage gemäß Fig. 2 in die Lage gemäß Fig. 1 zurückgeschoben wird. Über die Steuerschräge 32 und das Druckstück 33 wird die Wippe 35 im Gegenuhrzeigersinn geschwenkt, wodurch die Schneide 13 radial nach außen verstellt wird. Beim Rückhub des Werkzeuges aus der Bohrung kann mit der Schneide 13 die erforderliche Feinbearbeitung an der Bohrungswandung vorgenommen werden. Fig. 6 zeigt, daß bei der Fein-bzw. Schlichtbearbeitung lediglich die Schneide 13 in Eingriff mit der Bohrungswandung ist. Die beiden anderen ortsfesten Schneiden 63, 64 haben Abstand von der Bohrungswandung, da ihre Arbeitsdurchmesser kleiner sind als der Arbeitsdurchmesser der nachstellbaren Schneide 13.

Um das Werkzeug riefenfrei aus der Bohrung herausfah en zu können, kann es auch gezielt in Richtung der durch die Schneide 13 gehenden Radialebene so weit in Pfeilrichtung 65 verfahren, daß die Schneide 13 von der Bohrungswandung freikommt, die beiden anderen Schneiden 63, 64 aber noch Abstand von der Bohrungswandung haben. Das Werkzeug läßt sich dann einfach und zuverlässig ohne Riefenbildung aus der Werkstückbohrung herausziehen. Dieses Zurückfahren des Werkzeuges in Pfeilrichtung 65 ist bei Bearbeitungszentren mit mehreren orthogonalen Achsen möglich. Bei Sondermaschinen mit nur einer Achse kann dieses Rückziehverfahren nicht durchgeführt werden.

Um bei solchen Sondermaschinen dennoch ein riefenfreies Zurückziehen des Werkzeuges zu ermöglichen, wird nach Beendigung der Schlichtbearbeitung mittels der Schneide 13 über die zentrale Druckmittelzuführung der Kolben 6 der Stellstange 2 mit Druck beaufschlagt. Sie wird dann in der beschriebenen Weise axial so weit verschoben, bis die Spindelmutter 14 mit ihrer Unterseite 73 an der Schulterfläche 72 des Grundkörpers 1 anliegt (Fig. 2). Dadurch kommt die Steuerschräge 32 in eine solche Lage, daß die Wippe 35 im Uhrzeigersinn schwenken kann. Die Schneide 13 wird dadurch radial nach innen verstellt, so daß sie von der Bohrungswandung freikommt. Das Tellerfederpaket 38 sorgt dafür, daß das Druckstück 33 fest an der Steuerschräge 32 anliegt. Da die Schneide 13 auf diese Weise zurückgestellt ist, läßt sich das Werkzeug auch mit einer Sondermaschine mit nur einer Achse riefenfrei aus der Werkstückbohrung zurückziehen. Im Gegensatz zum Nachstellen der Schneide 13 muß bei diesem Zurückfahren der Schneide 13 das Werkzeug nicht stillgesetzt werden. Die beiden ortsfesten Schneiden 63, 64 sind während der Fein- bzw. Schlichtbearbeitung des Werkstückes ohnehin nicht in Eingriff mit der Bohrungswandung.

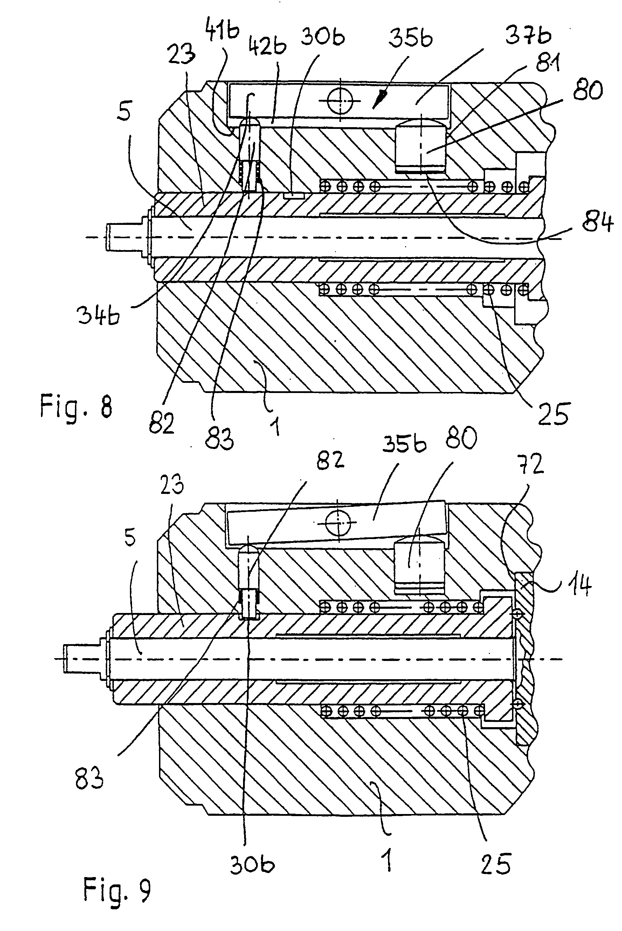

Die Fig. 8 und 9 zeigen eine weitere Ausführungsform eines Werkzeuges, das auf Bearbeitungszentren eingesetzt werden kann. Mit diesem Werkzeug ist eine Halbfertigbearbeitung im Niedergang und eine Fertig/Finishbearbeitung im Rückzug möglich. Das Werkzeug hat die Stellstange 5, auf der die Stellhülse 23 sitzt. Sie ist im wesentlichen gleich ausgebildet wie beim Ausführungsbeispiel nach den Fig. 1 bis 3. Eine Wippe 35b ist als zweiarmiger Hebel ausgebildet. Am Wippenarm 37b greift ein Fliehkraftelement 80 an, das verschiebbar in einer Sacklochbohrung 81 des Grundkörpers 1 gelagert ist. Die Sacklochbohrung 81 verläuft radial und mündet in die die Wippe 35b aufnehmende Vertiefung 42b. Das Fliehkraftelement 80 ist bolzenförmig ausgebildet und liegt mit einem abgerundeten Kopf an der dem Boden 41b der Vertiefung 42b zugewandten Seite des Wippenarmes 37b an.

Am anderen Wippenarm 34b greift auf der dem Boden 41b der Vertiefung 42b zugewandten Seite ein Verriegelungselement 82 an, das in Richtung auf die Wippe 35b durch wenigstens eine Druckfeder 83 belastet ist. Das Verriegelungselement 82 liegt mit einem abgerundeten Kopf am Wippenarm 34b an. Mit dem anderen Ende liegt das Verriegelungselement 82 in der in Fig. 8 dargestellten Stellung an der Stellhülse 23 an. Das Fliehkraftelement 80 liegt in dieser Stellung am Boden 84 der Sacklochbohrung 81 an.

In der Lage gemäß Fig. 8 ist die an der Wippe 35 (Fig. 1) vorgesehene verstellbare Schneide radial nach außen verstellt. Wird das Werkzeug mit der Drehzahl n_{Bearbeltung} gedreht, wirkt auf das Fliehkraftelement 80 eine nach außen wirkende Fliehkraft, die versucht, die Wippe 35b in der Darstellung gemäß Fig. 8 im Gegenuhrzeigersinn zu schwenken. Dies wird aber durch das Verriegelungselement 82 verhindert, das auf der Stellhülse 23 abgestützt ist.

Um eine Halbfertigbearbeitung durchzuführen, wird die Stellstange 5 in der beschriebenen Weise über den (nicht dargestellten) Kolben mit Druck beaufschlagt. Die Stellstange 5 wird dann so weit verschoben, bis die Spindelmutter 14 an der Schulterfläche 72 des Grundkörpers 1 zur Anlage kommt (Fig. 9). Eine Nut 30b an der Stellhülse 23 befindet sich dann in Höhe des Verriegelungselementes 82. Mit der Druckbeaufschlagung der Stellstange 5 wird das Werkzeug mit einer Drehzahl n₂ gedreht. Sie ist so gewählt, daß das Fliehkraftelement 80 nach außen bewegt wird. Da sich das Verriegelungselement 82 in Höhe der Nut 30b befindet, kann die Wippe 35b im Gegenuhrzeigersinn verschwenkt werden. Die Kraft der Druckfeder 83 ist so gewählt, daß sie kleiner ist als die bei der Drehzahl n₂ vom Fliehkraftelement 80 auf die Wippe 35b ausgeübte Druckkraft. Dadurch wird das Verriegelungselement 82 gegen die Kraft der Druckfeder 83 in die in Fig. 9 dargestellte Verriegelungsstellung verschoben, in der das Verriegelungselement 82 in die Nut 30b eingreift. Dadurch wird die Stellhülse 23 axial verriegelt, so daß sie unter der Kraft der Druckfeder 25 nicht axial zurückgeschoben werden kann.

Somit ist die nachstellbare Fertigschneide auch ohne Druckzufuhr von der Bohrungswandung abgehoben, so daß mit den ortsfesten Schneiden des Werkzeuges die Halbfertigbearbeitung am Werkstück beim Niedergang vorgenommen werden kann. Sobald die Halbfertigbearbeitung beendet ist, d.h. das Werkzeug sich in der Bohrung befindet, wird die Antriebsspindel gestoppt, so daß auch die Stellstange 5 stillsteht. Da dann auf das Fliehkraftelement 80 keine Fliehkraft mehr wirkt, kann das Verriegelungselement 82 mit Hilfe der Druckfeder 83 die Wippe 35b im Uhrzeigersinn zurückschwenken, bis das Fliehkraftelement 80 am Boden 84 der Sacklochbohrung 81 aufliegt (Fig. 8). Die Stellhülse 23 und damit die Stellstange 5 ist auf diese Weise entriegelt, so daß nach dem Druckabbau im Druckraum 7 (Fig. 1) die Stellhülse 23 unter der Kraft der Druckfeder 25 über die Spindelmutter 14 die Stellstange 5 zurückschiebt (Fig. 8). Nunmehr kann im Rückzug des Werkzeuges die Finishbearbeitung bei der Arbeitsdrehzahl n_{Bearbeitung} vorgenommen werden.

Fig. 10 zeigt beispielhaft die Bearbeitung von Zylinderbohrungen 85 auf einem Bearbeitungszentrum 86. Die Zylinderbohrungen 85 sind in einem Motorblock 87 vorgesehen, der in bekannter Weise auf einer Palette 88' gespannt ist, die auf einem Drehtisch 88 gelagert ist. Die Zylinderbohrungen 85 liegen auf einander gegenüberliegenden Seiten des Motorblockes 87 jeweils mit geringem Abstand nebeneinander. Die verschiedenen Zylinderbohrungen 85 können mit nur einem Werkzeug nacheinander bearbeitet werden. Infolge der beschriebenen Nachstellung der Schneide 13 benötigt das Werkzeug nur wenig Bauraum, so daß auch mehrere Werkzeuge mit kleinem Abstand nebeneinander angeordnet werden können (Fig. 10b). Dadurch ist es möglich, eine Mehrspindelbearbeitung der Zylinderbohrungen 85 vorzunehmen. Bei herkömmlichen Werkzeugen, die zum Ausgleich des Schneidenverschleißes eine zusätzliche Achse oder eine Exzenterspindel benötigen, können die Werkzeuge nur mit größerem Abstand nebeneinander angeordnet werden. Dadurch ist es nicht möglich, eng nebeneinander angeordnete Zylinderbohrungen gleichzeitig mit mehreren Werkzeugen zu bearbeiten. Bei den beschriebenen Werkzeugen sind solche zusätzlichen Achsen oder Exzenterspindeln zum Nachstellen der Schneide 13 nicht vorgesehen. Dadurch sind die Werkzeuge sehr kompakt ausgebildet, so daß sie in so kleinen Abständen nebeneinander angeordnet werden können, daß nebeneinander liegende Zylinderbohrungen 85 gleichzeitig bearbeitet werden können. Die Werkzeuge sind nebeneinander an einer mehrspindeligen Bohrkassette 146 vorgesehen, die längs eines Ständers 147 der Bearbeitungsmaschine 86 in y-Richtung verfahren werden kann. Der Ständer 86 ist in z-Richtung verfahrbar, während der den Motorblock 87 tragende Drehtisch 88 in x-Richtung verfahrbar ist.

Darüber hinaus können die verschiedenen, an der Bohrkassette 146 vorgesehenen Werkzeuge unabhängig voneinander meßgesteuert nachgestellt werden. Jedes Werkzeug ist mit einer eigenen Druckmittelzuführung versehen, so daß jedes einzelne Werkzeug in der beschriebenen Weise meßgesteuert nachgestellt werden kann. Es wird nur dasjenige Werkzeug mit dem erforderlichen Druck beaufschlagt, dessen Schneide nachgestellt werden soll. Die Bohrkassette 146 kann wahlweise mit einer separaten Meßeinrichtung 148 (Fig. 10b) versehen sein, mit der die Zylinderbohrung 85 nach der Bearbeitung vermessen werden kann.

An den beschriebenen Werkzeugen können anstatt einer nachstellbaren Schneide 13 und mehreren festen Schneiden 63, 64 auch mehrere nachstellbare Schneiden angeordnet sein. Sie können sowohl am Umfang verteilt als auch axial hintereinander angeordnet sein.

Die Schneideneinstellung kann durch Fliehkraft-Druckmittel-Steuerung im Automatikbetrieb in einer Plus- und in einer Minus-Richtung verstellt werden. Soll der Verschleiß der Schneide 13 kompensiert werden, erfolgt eine Verstellung in Plus-Richtung, d.h. die Wippe 35, 35b wird so geschwenkt, daß die Schneide 13 entsprechend dem Schneidenverschleiß nach außen verstellt wird.

Ist der mögliche Nachstellbereich erreicht, dann wird die Wippe 35 wieder so weit zurückgeschwenkt, bis sie die Ausgangsstellung (Fig. 2) erreicht. Für dieses Zurückstellen ist eine Verstellung in Minus-Richtung erforderlich. Dieses Zurückstellen kann in einem oder in mehreren Schritten erfolgen, beispielsweise bei Probebohrungen oder Kontrollschnitten, wenn der Durchmesser der Bohrung größer als vorgegeben ausfällt.

Die jeweilige Verstellrichtung wird durch die Reihenfolge der Betätigung des Drehantriebes und des Druckmittels erreicht. Wird zunächst der Kolben 6 der Stellstange 5 mit Druck beaufschlagt und damit die Stellstange 5 in der beschriebenen Weise axial verschoben und anschließend das Werkzeug gedreht, wird in der beschriebenen Weise über das Fliehkraftelement 44 die Schneide 13 so nachgestellt, daß ihr Verschleiß kompensiert wird. Eine Verstellung in Plus-Richtung erfolgt auch dann, wenn zunächst die Druckbeaufschlagung des Kolbens 6 beendet und anschließend das Werkzeug stillgesetzt wird.

Wird umgekehrt zunächst das Werkzeug drehbar angetrieben und anschließend bei drehendem Werkzeug der Kolben 6 mit Druck beaufschlagt, wird lediglich die Stellstange 5 mit der Stellspindel 17 und der Stellhülse 23 axial verschoben. Die Steuerschräge 32 wird dabei relativ zum Druckstück 33 so weit verschoben, daß die Wippe 35 zum Zurückstellen der Schneide 13 in der entsprechenden Richtung schwenken kann. Diese Verstellung in Minus-Richtung wird auch erreicht, wenn zunächst das Werkzeug stillgesetzt und anschließend die Druckbeaufschlagung des Kolbens 6 beendet wird.

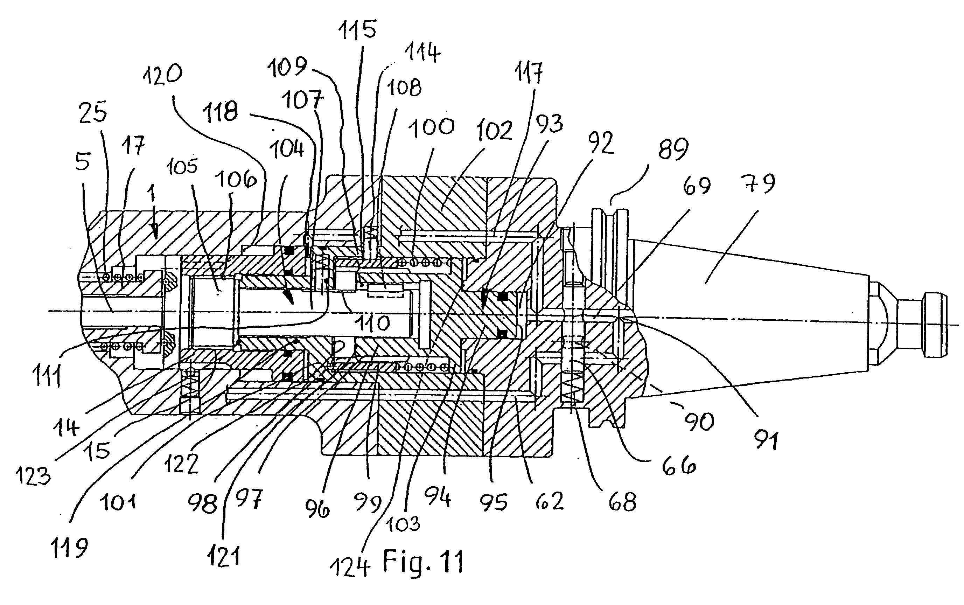

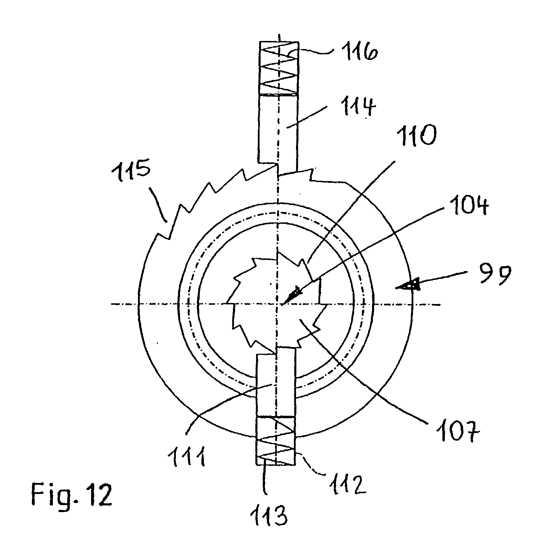

Die Fig. 11 und 12 zeigen ein Werkzeug, bei dem die Schneide über zwei unterschiedliche fluidische Druckstufen ohne ein direkt wirkendes Fliehkraftelement verstellt werden kann. Im dargestellten Ausführungsbeispiel ist das Werkzeug mit dem Einspannkegel 79 versehen, so daß dieses Werkzeug - wie auch die Werkzeuge gemäß den Fig. 5 und 7 - automatisch gewechselt werden kann. Hierzu ist am Einspannkegel 79 eine Greifernut 89 vorgesehen. Das Werkzeug kannn auch entsprechend der Ausführungsform nach den Fig. 1 bis 3 ausgebildet sein und einen Anschlußflansch aufweisen, mit dem es unmittelbar an der Antriebsspindel befestigt wird. Das Werkzeug hat den Schieber 66, mit dem wechselweise die Kühlmittelbohrung 62 und die Druckmittelbohrung 69 geöffnet werden können. Der Schieber 66 ist hierfür mit entsprechenden Radialbohrungen 90 und 91 versehen. Die Druckmittelbohrung 69 mündet in einen Druckraum 92, der durch ein Verstellelement 93 begrenzt ist. Es hat einen als Kolben wirkenden Ansatz 94, dessen ebene Stirnseite 95 den Druckraum 92 begrenzt. Der Kolben 94 steht von einem Hülsenteil 96 axial ab, das mit einem Außenteil 97 eines Bewegungsgewindes versehen ist. Es greift in ein Innenteil 98 des Bewegungsgewindes ein. Das Innenteil 98 ist an einem Sperrad 99 vorgesehen, das buchsenförmig ausgebildet ist und unter der Kraft einer Druckfeder 100 am Boden 122 eines Gehäusezwischenteiles 102 anliegt. Das Verstellelement 93 hat einen radial nach außen gerichteten Flansch 103, der an der Innenwandung des Gehäusezwischenteiles 102 anliegt. Am Flansch 103 ist die Druckfeder 100 abgestützt, die den Hülsenteil 96 des Verstellelementes 93 mit Abstand umgibt.

In den Hülsenteil 96 des Verstellelementes 93 ragt eine Gewindespindel 104, die einen im Durchmesser verbreiterten Endabschnitt 105 aufweist, der am Umfang mit einem Schraubgewinde 106 versehen ist. Es steht in Eingriff mit dem Schraubgewinde 15 der Spindelmutter 14, die fest mit der Stellstange 5 verbunden ist. Auf ihr sitzt die Stellspindel 17. Da der in Fig. 11 linke Teil des Werkzeuges gleich ausgebildet ist wie bei der Ausführungsform nach den Fig. 1 bis 3, ist dieser Teil des Werkzeuges der Übersichtlichkeit wegen in Fig. 11 nicht dargestellt.

Die Gewindespindel 104 hat einen vom Endabschnitt 105 axial abstehenden zylindrischen Ansatz 107, der nahe seinem freien Ende mit mindestens einem Mitnehmer 108 versehen ist, der radial über den Ansatz 107 ragt und in eine axial verlaufende Vertiefung 109 in der Innenwandung des Hülsenteiles 96 eingreift. Auf diese Weise sind das Verstellelement 93 und die Gewindespindel 104 in Drehrichtung formschlüssig miteinander verbunden. In Achsrichtung ist eine Relativverschiebung zwischen dem Verstellelement 93 und der Gewindespindel 104 möglich.

Der Ansatz 107 der Gewindespindel 104 ist im Bereich außerhalb des Mitnehmers 108 mit einer Rastverzahnung 110 versehen, die als Klinkenverzahnung ausgebildet ist und in die ein Rastbolzen 111 unter Federkraft eingreift. Der Rastbolzen 111 ist in einer Radialbohrung 112 (Fig. 12) des Grundkörpers 1 bzw. seines Gehäusezwischenteiles 102 gelagert und wird durch eine Druckfeder 113 in Richtung auf seine Raststellung belastet. Aufgrund der Klinkenverzahnung 110 kann die Gewindespindel 104 nur in einer Richtung gedreht werden, während in der Gegenrichtung eine Drehung durch den Rastbolzen 111 verhindert wird.

Im Grundkörper 1 ist ein weiterer Rastbolzen 114 radial verschiebbar gelagert, der in eine Rastverzahnung 115 am Umfang des Sperrades 99 eingreift. Die Rastverzahnung 115 ist ebenfalls als Klinkenverzahnung ausgebildet, so daß das Sperrad 99 nur in einer Richtung gedreht werden kann. In der anderen Richtung verhindert der Rastbolzen 114 die Drehung des Sperrades 99. Wie Fig. 12 zeigt, sind die beiden Rastverzahnungen 110 und 115 so vorgesehen, daß in der Darstellung gemäß Fig. 12 die Gewindespindel 104 im Uhrzeigersinn und das Sperrad 99 entgegen dem Uhrzeigersinn gedreht werden können. Der Rastbolzen 114 steht unter der Kraft einer Druckfeder 116 (Fig. 12), die den Rastbolzen 114 in Richtung auf seine Raststellung belastet.

Von der Druckmittelbohrung 69, die in den Druckraum 92 mündet, zweigt eine Druckmittelbohrung 117 ab (Fig. 11), die in einen Druckraum 118 mündet, der von der Spindelmutter 14 der Stellstange 5 begrenzt wird. Der Gehäusezwischenteil 102 hat einen Hülsenteil 119, auf dem abgedichtet die Spindelmutter 14 verschiebbar geführt ist. Die Spindelmutter 14 liegt außerdem an der Innenwandung des Gehäuseteiles 1 abgedichtet an. Der Verschiebeweg der Spindelmutter 14 wird durch eine radial nach innen ragende umlaufende Schulterfläche 120 an der Innenwandung des Grundkörpers 1 begrenzt. An ihr kommt die Spindelmutter 14 beim noch zu beschreibenden Verstellvorgang zur Anlage. Die Gewindespindel 104 ragt durch den Hülsenteil 119 des Gehäusezwischenteiles 102. Der Endabschnitt 105 der Gewindespindel 104 liegt im Bereich außerhalb des Hülsenteiles 119. Wie Fig. 11 zeigt, ragt die Gewindespindel 104 mit ihrem Endabschnitt 105 in die Spindelmutter 14. In der Ausgangslage gemäß Fig. 11 hat der Druckraum 118, der sich zwischen der Spindelmutter 14 und dem Gehäusezwischenteil 102 befindet, sein kleinstes Volumen: Soll nach der Bearbeitung der Werkstückbohrung das Werkzeug rückzugsriefenfrei aus der Bohrung zurückgefahren werden, wird die Schneide 13 (Fig. 1) radial zurückgestellt. Hierzu wird eine niedere Druckstufe zugeschaltet, d.h. das Druckmittel wird mit einem entsprechend geringen Druck über die Druckmittelbohrung 69 zugeführt. Der Schieber 66 befindet sich hierbei in der in Fig. 11 dargestellten Lage, in welcher die Kühlmittelbohrung 62 geschlossen und die Druckmittelbohrung 69 geöffnet wird. Das Druckmittel strömt über die Druckmittelbohrung 117 in den Druckraum 118. Dadurch wird die Stellstange 5 mit der fest mit ihr verbundenen Spindelmutter 14 gegen die Kraft der Druckfeder 25 verschoben, bis die Spindelmutter 14 an der Schulterfläche 120 zur Anlage kommt. Durch Verschieben der Stellstange 5 gelangt die Steuerschräge 32 in die in Fig. 2 dargestellte Lage relativ zum Druckstück 33, wodurch die Schneide 13 unter der Kraft des Tellerfederpaketes 38 radial nach innen gefahren wird und dadurch von der Bohrungswandung abhebt. Das Druckmittel wird mit einem solchen Druck zugeführt, daß das Verstellelement 93 nicht verschoben wird.

Soll die Schneide 13 wegen Verschleiß nachgestellt werden, wird der Druck des Druckmittels auf eine zweite Stufe erhöht. Durch den höheren Druck wird das Verstellelement 93 gegen die Kraft der Druckfeder 100 verschoben, bis es mit der Stirnseite 121 seines Hülsenteiles 96 an einer radial nach innen gerichteten Wand 122 des Gehäusezwischenteiles 102 zur Anlage kommt. Beim Verschieben wird das Verstellelement 93 um seine Achse gedreht, da es mit seinem Außenteil 97 in das Innenteil 98 des Sperrades 99 eingreift. Die beiden Gewindeteile 97, 98 sind jeweils als Bewegungsgewinde, insbesondere als Steilgewinde, ausgebildet. Das Sperrad 99 selbst ist gegen Verdrehen in Gegenrichtung durch den Rastbolzen 114 gesperrt. Über den Mitnehmer 108 wird beim Drehen des Verstellelementes 93 die Gewindespindel 104 um einen Schritt gedreht. Der Rastbolzen 111 erlaubt in dieser Drehrichtung ein Verdrehen der Gewindespindel 104 (Fig. 12). Dadurch wird die Gewindespindel 104 um einen Zahn der Rastverzahnung 110 weitergedreht. Dieser Drehschritt wird durch die Steigung des Innengewindes 98 des Sperrades 99 und durch den ursprünglichen Abstand zwischen der Stirnseite 121 des Verstellelementes 93 und der Wand 122 des Gehäusezwischenteiles 102 definiert. In dieser Drehrichtung ist die Gewindespindel 104 nicht blokkiert, da die Rastverzahnung 110 im Vergleich zur Rastverzahnung 115 des Sperrades 99 entgegengesetzt ausgebildet ist. Dadurch ratscht der Rastbolzen 111 über die Zähne der Rastverzahnung 110. Bei dieser Drehung schraubt sich die Gewindespindel 104 in die Spindelmutter 14. Wie anhand der vorigen Ausführungsbeispiele erläutert worden ist, wird dadurch der Abstand zwischen der Steuerschräge 32 (Fig. 1) und dem gehäusefesten Anschlag 123 verändert. Er wird durch die Stirnseite des Hülsenteils 119 des Gehäusezwischenteiles 102 gebildet.

Nach dem Verdrehen der Gewindespindel 104 wird der Druck, unter den das Druckmedium gesetzt wird, auf die erste Stufe verringert. Die Druckfeder 100 ist so ausgelegt, daß ihre Kraft dann größer ist als die auf die Stirnseite 95 des Verstellelementes 93 wirkende Hydraulikkraft. Dadurch wird das Verstellelement 93 wieder in die in Fig. 11 dargestellte Lage zurückgefahren, in der das Verstellelement 93 mit seinem Flansch 103 am gehäusefesten Anschlag 124 anliegt. Da das Verstellelement 93 und das Sperrad 99 über die Schraubgewinde 97, 98 miteinander in Eingriff sind, wird beim Zurückschieben des Verstellelementes 93 das Sperrad 99 um einen Schritt gedreht. In Fig. 12 erfolgt somit die Drehung des Sperrades 99 entgegen dem Uhrzeigersinn. Der Rastbolzen 114 ratscht in diesem Falle über den entsprechenden Zahn der Rastverzahnung 115. Nunmehr verhindert der Rastbolzen 114, daß die Gewindespindel 104 im Gegenuhrzeigersinn (entsprechend Fig. 12) gedreht werden kann.

Sobald das Verstellelement 93 am Anschlag 124 zur Anlage kommt, wird die Druckbeaufschlagung des Druckmediums abgeschaltet, so daß der Druckraum 118 drucklos wird. Dann kann die Druckfeder 25 die Spindelmutter 14 und damit die Stellstange 5 zurückschieben, bis der Endabschnitt 105 der Gewindespindel 104 am gehäusefesten Anschlag 123 zur Anlage kommt. Da, wie anhand der vorigen Ausführungsbeispiele erläutert worden ist, der Abstand zwischen der Steuerschräge 32 und dem gehäusefesten Anschlag 123 durch die Verstellung verringert worden ist, wird beim Zurückschieben der Stellstange 5 über das Druckstück 33 (Fig. 1) die Wippe 35 so geschwenkt, daß die Schneide 13 radial nach außen verstellt wird. Dieser Verstellschritt ist so groß, daß der Verschleiß der Schneide 13 kompensiert wird.

Soll die Schneide 13 um mehrere Schritte verstellt werden, wird die höhere Druckstufe mehrmals eingesetzt, so daß die Gewindespindel 104 um mehrere Schritte gedreht wird.

Nach der Nachstellung der Schneide 13 und Abschalten des Druckes wird das Werkzeug mit der Arbeitsdrehzahl n_{Bearbeitung} gedreht. Der Schieber 66 ist wiederum so ausgebildet und angeordnet, daß er durch die dabei entstehende Fliehkraft gegen die Kraft der Druckfeder 68 verschoben wird. Dadurch wird die Druckmittelbahrung 69 geschlossen und die Kühlmittelbohrung 62 geöffnet. Das Kühlmittel, das bislang als Druckmedium verwendet worden ist, wird dadurch in den Schneidenbereich des Werkzeuges umgeleitet.

Anstelle der beschriebenen Klinkenverzahnungen 110, 115 ist es auch möglich, die jeweilige Verdrehung in nur einer Richtung durch eine Freilaufkupplung zu ermöglichen.

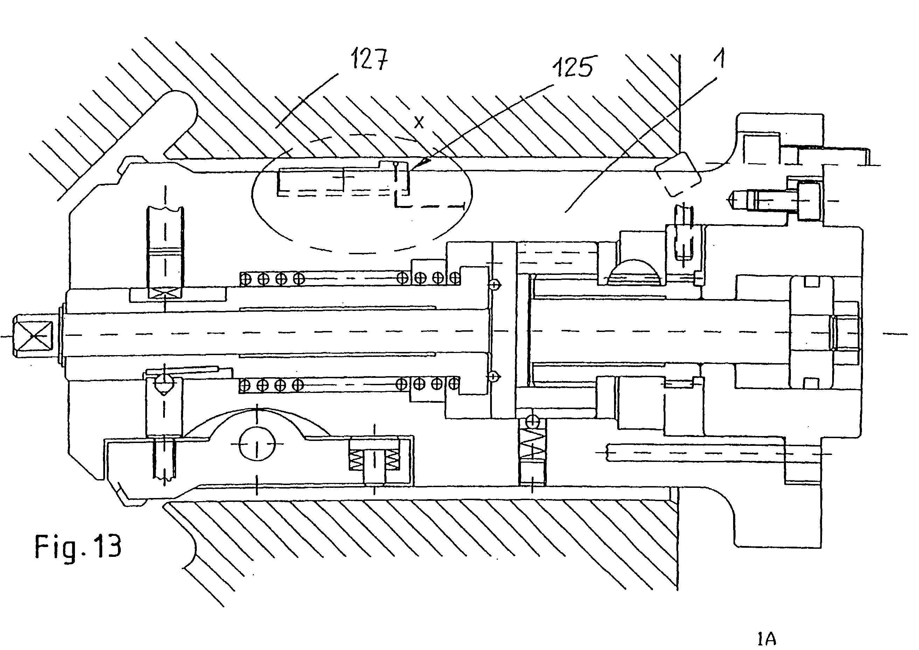

Die Fig. 13 bis 15 zeigen ein Werkzeug, das mit integrierten Luftmeßdüsen versehen ist, so daß sehr einfach der genaue Durchmesser der Bohrung gemessen werden kann. Diese Luftmeßdüsen arbeiten so genau, daß eine Durchmesser-Messung im µ-Bereich möglich ist. Da die Luftmeßdüsen in das Werkzeug integriert sind, ist ein separater Meßdorn nicht erforderlich, so daß die Nebenzeiten beim Einsatz des Werkzeuges verkürzt werden. Außerdem ergibt sich eine wesentlich genauere Messung als mit einem separaten Meßdorn, weil die Luftmeßdüsen direkt auf dem Bearbeitungswerkzeug angeordnet sind und darum Positionierfehler vermieden werden.

Das Werkzeug nach den Fig. 13 bis 15 kann eine Ausführungsform entsprechend den Fig. 1 bis 12 haben. Im dargestellten Ausführungsbeispiel entspricht das Werkzeug, bis auf die zu beschreibenden Unterschiede, der Ausführungsform nach den Fig. 1 bis 3.

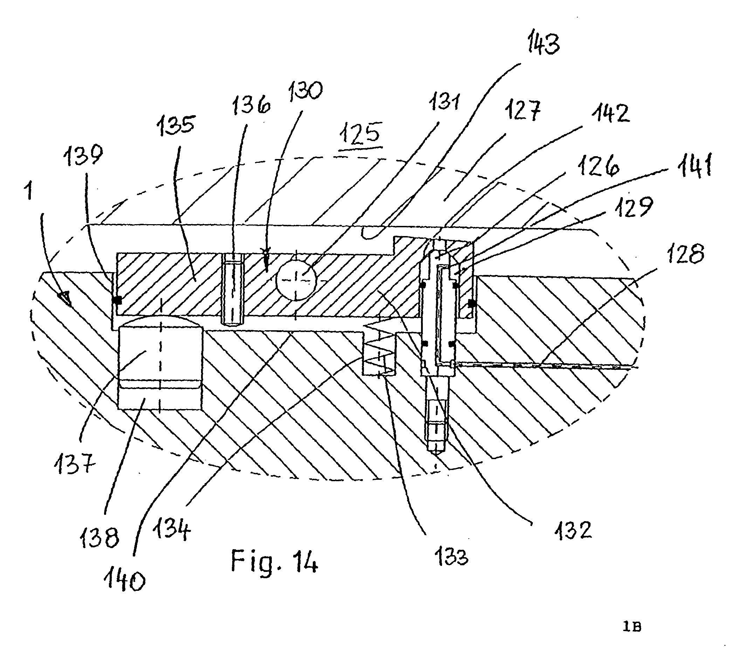

Die nach dem Druckluftprinzip arbeitende Meßeinrichtung 125 ist am Grundkörper 1 des Werkzeuges angeordnet. Während der spanabhebenden Bearbeitung ist die Meßeinrichtung 125 abgekoppelt und, wie Fig. 14 zeigt, so angeordnet, daß eine Meßdüse 126 der Meßeinrichtung 125 nicht mit der Bohrungswandung des zu bearbeitenden Werkstückes 127 in Berührung kommen kann. Die Meßdüse 126 ist feststehend am Grundkörper 1 des Werkzeuges angeordnet. In sie mündet eine Druckluftleitung 128, die an eine Druckluftquelle angeschlossen ist. Die Meßdüse 126 ragt in einen Aufnahmeraum 129 einer zweiarmigen Wippe 130. Sie ist um eine senkrecht zur Achse des Werkzeuges liegende, nahe dem Umfang des Grundkörpers 1 vorgesehene Achse 131 schwenkbar. An dem den Aufnahmeraum 129 aufweisenden Arm 132 stützt sich eine Druckfeder 133 ab, die in einer Vertiefung 134 in der Außenseite des Grundkörpers 1 vorgesehen ist. Der andere Wippenarm 135 weist eine Stellschraube 136 auf, die als Gewindestift ausgebildet ist und mit welcher der Schwenkweg der Wippe 130 für den Meßvorgang eingestellt werden kann. Der Wippenarm 135 liegt im Bereich seines freien Endes auf einem Fliehkraftelement 137 auf, das in einer Vertiefung 138 in der Außenseite des Grundkörpers 1 radial verschiebbar gelagert ist. Die Wippe 130 ragt teilweise in eine an der Außenseite des Grundkörpers 1 vorgesehene Vertiefung, in deren Boden 140 die Vertiefungen 134 und 138 münden.

Während der Bearbeitung des Werkstückes 127 dreht das Werkzeug mit der Drehzahl n_{Bearbeitung}. Das Fliehkraftelement 137 ist so ausgelegt und am Grundkörper 1 angeordnet, daß es sich unter Fliehkraft radial nach außen bewegt und hierbei die Wippe 130 gegen die Kraft der Druckfeder 133 schwenkt (Fig. 14). Die Austrittsöffnung 141 liegt seitlich an der Meßdüse 126. Während der Werkstückbearbeitung liegt der Boden 142 des Aufnahmeraumes 129 über den Umfang der Meßdüse 126 an deren Stirnbereich an. Dadurch ist die Düsenaustrittsöffnung 141 geschlossen, so daß während der Werkstückbearbeitung anfallender Schmutz nicht in die Düsenaustrittsöffnung 141 gelangt und diese verstopft: Während der Werkstückbearbeitung findet eine Messung nicht statt. Die Wippe 130 liegt mit ausreichendem Abstand von der Bohrungswandung 143, so daß eine Beschädigung durch die Wippe vermieden wird.

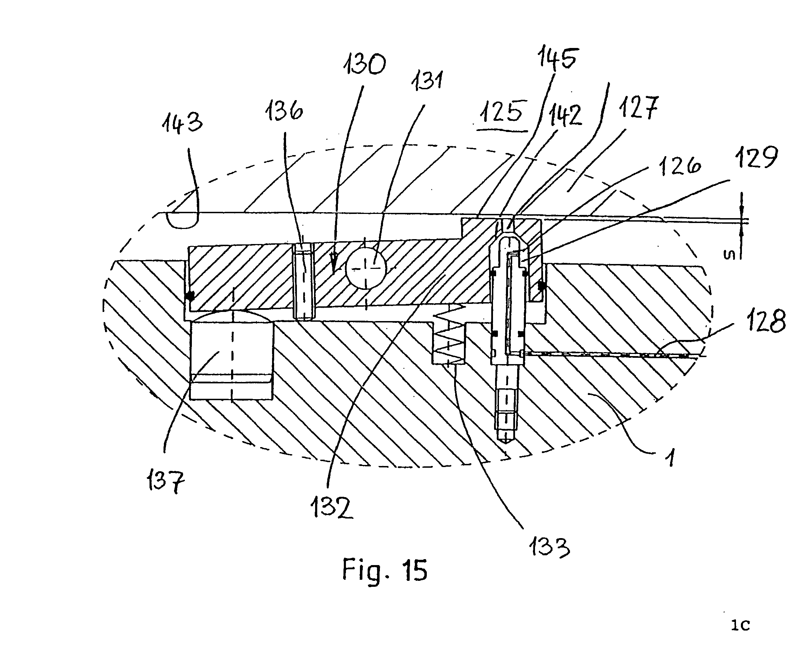

Nach der Werkstückbearbeitung wird die Antriebsspindel und damit das Werkzeug stillgesetzt. Da nunmehr auf das Fliehkraftelement 137 keine Fliehkraft mehr wirkt, wird die Wippe 130 unter der Kraft der Druckfeder 133 in die in Fig. 15 dargestellte Lage geschwenkt. Der Schwenkwinkel wird durch den Überstand der Stellschraube 136 über die Wippe 130 bestimmt. Die Stellschraube 136 kommt am Boden 140 der Vertiefung 139 zur Anlage und beendet damit die Schwenkbewegung der Wippe 130. Aufgrund der Schwenkbewegung der Wippe 130 hebt der Boden 142 des Aufnahmeraumes 129 von der Meßdüse 126 ab. Die Druckluft kann somit aus der Austrittsöffnung 141 der Meßdüse 126 zu einer gegen die Bohrungswandung 143 gerichteten Austrittsöffnung 144 im Wippenarm 132 strömen. Im Bereich der Meßdüse 126 ist der Wippenarm 132 verdickt ausgebildet. Die gegen die Bohrungswandung 143 gerichtete Stirnseite 145 des Wippenarmes 132 bildet eine Meßfläche, die der Bohrungswandung 143 mit einem Meßspalt s gegenüberliegt (Fig. 15). Die Größe dieses Meßspaltes s kann mit der Stellschraube 136 feinfühlig und stufenlos eingestellt werden. Somit wird die fertige Bohrung durch die Druckluft gemessen. Die Auswertung des Meßergebnisses ist an sich bekannt und wird darum nicht näher erläutert.

Die Druckluft wird maschinenseitig nach der Bearbeitung des Werkstückes 127 am stehenden Werkzeug in an sich bekannter Weise angedockt. Zur Messung der fertigen Bohrung reicht eine Meßdüse 126 aus. Es ist selbstverständlich möglich, über den Umfang des Werkzeuges mehrere Meßdüsen vorzusehen, die in gleicher Weise ausgebildet sind, wie es anhand der Fig. 13 bis 15 erläutert worden ist. Die Meßdüsen können sowohl am Umfang verteilt als auch axial hintereinander angeordnet sein.

Die Düsen können auch als einfache Austrittsöffnungen auf einem genauen Durchmesser des Werkzeuges vorgesehen sein. Schließlich ist es möglich, die fertige Bohrung nicht nur über den Luftspalt s vorzunehmen, sondern auch einen unmittelbaren Kontakt zwischen der Meßeinrichtung und dem Werkstück 127 vorzusehen. Die Meßeinrichtung 125 ist in diesem Falle selbstverständlich so ausgebildet, daß sie die Bohrungswandung nicht beschädigt.

Die fliehkraftgesteuerte Wippe 130 hat mehrere Funktionen. Während der Bearbeitung des Werkstückes verschließt sie die Meßdüse 126, so daß Schmutz, Kühlmittel und dergleichen nicht an die Meßdüse gelangen kann. Darüber hinaus hebt sie bei Stillstand des Werkzeuges selbsttätig von der Meßdüse ab, so daß unmittelbar anschließend der Meßvorgang mittels der Druckluft durchgeführt werden kann. Die Meßfläche 145 kommt beispielsweise bei einem Schneidenbruch mit der Bohrungswandung 143 zwar in Berührung, wird jedoch nicht beschädigt, da das Werkzeug während des Meßvorganges stillsteht.

## Patentansprüche

1. Werkzeug mit einem Grundkörper, an dem wenigstens ein Schneidenträger, vorzugsweise eine Wippe, quer zur Achse des Werkzeuges verstellbar gelagert ist, der eine Schneide trägt und der über ein Druckstück an einer Steuerschräge anliegt, die an einer im Grundkörper durch Druckkraft axial verschiebbar gelagerten Stellhülse vorgesehen ist, **dadurch gekennzeichnet, daß** die Bewegung des Schneidenträgers (35) zum Nachstellen der Schneide durch mindestens ein fliehkraftbetätigtes Element (44, 66) gesteuert wird, das bei einer Drehzahl (n₁), die kleiner als die Arbeitsdrehzahl (n_{Bearbeitung}) des Werkzeuges ist, unter Fliehkraft verstellbar im Grundkörper (1) gelagert ist.

2. Werkzeug nach Anspruch 1,
**dadurch gekennzeichnet, daß** das fliehkraftbetätigte Element (44, 66) eine gezielte Verdrehung eines Schraubelementes (17, 104) relativ zu einer Stellstange (5) auslöst, auf der die Stellhülse (23) gelagert ist.

3. Werkzeug nach Anspruch 2,
**dadurch gekennzeichnet, daß** das Schraubelement (17, 104) und die Stellstange (5) über Schraubgewinde (15, 16; 15, 106) miteinander verbunden sind.

4. Werkzeug nach Anspruch 2 oder 3,
**dadurch gekennzeichnet, daß** das Schraubelement (17, 104) koaxial zur Stellstange (5) liegt.

5. Werkzeug nach einem der Ansprüche 2 bis 4,
**dadurch gekennzeichnet, daß** das Schraubelement (17, 104) durch das fliehkraftbetätigte Element (44) um seine Achse drehbar ist.

6. Werkzeug nach einem der Ansprüche 1 bis 5,
**dadurch gekennzeichnet, daß** das fliehkraftbetätigte Element (44) gegen Federkraft radial nach außen durch Fliehkraft verstellbar ist.

7. Werkzeug nach einem der Ansprüche 2 bis 6,
**dadurch gekennzeichnet, daß** das fliehkraftbetätigte Element (44) eine Verzahnung (45) aufweist, die mit einer Verzahnung (18) am Umfang des Schraubelementes (17) in Eingriff ist.

8. Werkzeug nach einem der Ansprüche 2 bis 7,
**dadurch gekennzeichnet, daß** durch Verdrehen des Schraubelementes (17, 104) relativ zur Stellstange (5) der axiale Abstand zwischen der Steuerschräge (32) und einem werkzeugfesten Anschlag (22, 123) für das Schraubelement (17, 104) einstellbar ist.

9. Werkzeug nach einem der Ansprüche 2 bis 8,
**dadurch gekennzeichnet, daß** das Schraubelement (17, 104) eine Gewindespindel ist.

10. Werkzeug nach einem der Ansprüche 1 bis 9,
**dadurch gekennzeichnet, daß** die Stellhülse (23) verdrehgesichert ist.

11. Werkzeug nach Anspruch 10,
**dadurch gekennzeichnet, daß** die Stellhülse (23) wenigstens eine Nut (30, 30b) für ein Verriegelungselement (29, 82) aufweist.

12. Werkzeug nach einem der Ansprüche 2 bis 11,
**dadurch gekennzeichnet, daß** das Schraubelement (17; 104) während der Bearbeitung des Werkstückes (87, 127) gegen Drehen relativ zum Grundkörper (1) gesichert ist.

13. Werkzeug nach einem der Ansprüche 1 bis 12,
**dadurch gekennzeichnet, daß** die Zufuhr des Druckmittels fliehkraftgesteuert erfolgt.

14. Werkzeug nach einem der Ansprüche 1 bis 13,
**dadurch gekennzeichnet, daß** mit dem fliehkraftbetätigten Element (66) eine Druckmittelbohrung (69) verschließbar bzw. freigebbar ist.

15. Werkzeug nach Anspruch 14,
**dadurch gekennzeichnet, daß** das fliehkraftbetätigte Element (66) eine Kühlmittelbohrung (62) und die Druckmittelbohrung (69) wechselseitig öffnet und schließt.

16. Werkzeug nach Anspruch 14 oder 15,
**dadurch gekennzeichnet, daß** zum Verstellen des fliehkraftbetätigten Elementes (66) unter Fliehkraft eine Drehzahl (n₃) des Werkzeuges erforderlich ist, die zwischen der Drehzahl (n₁) zum Verstellen des fliehkraftbetätigten, am Schraubelement (17) angreifenden Elementes (44) und der Arbeitsdrehzahl (n_{Bearbeltung}) des Werkzeuges liegt.

17. Werkzeug nach einem der Ansprüche 1 bis 16,
**dadurch gekennzeichnet, daß** an einer Wippe (35b) ein fliehkraftgesteuertes Verstellelement (80) angreift, das bei einer Drehzahl (n₂), die zwischen der Drehzahl (n₁) zum Betätigen des fliehkraftbetätigten Elementes (44) und der Drehzahl (n₃) zum Verstellen des fliehkraftbetätigten Elementes (66) zum Verschließen bzw. Freigeben der Druckmittelbohrung (69) liegt, verstellbar ist.

18. Werkzeug nach Anspruch 17,
**dadurch gekennzeichnet, daß** das fliehkraftgesteuerte Verstellelement (80) in einer radialen Aufnahme (81) des Grundkörpers (1) untergebracht ist.

19. Werkzeug nach einem der Ansprüche 1 bis 18,
**dadurch gekennzeichnet, daß** das Schraubelement (104) eine Klinkenverzahnung (110) aufweist, in die mindestens ein Rastbolzen (111) eingreift.

20. Werkzeug nach einem der Ansprüche 5 bis 19,
**dadurch gekennzeichnet, daß** das Schraubelement (104) in das Verstellelement (93) ragt.

21. Werkzeug nach Anspruch 20,
**dadurch gekennzeichnet, daß** das Schraubelement (104) und das Verstellelement (93) in Umfangsrichtung formschlüssig miteinander verbunden sind.

22. Werkzeug nach Anspruch 20 oder 21,
**dadurch gekennzeichnet, daß** das Schraubelement (104) und das Verstellelement (93) axial relativ zueinander verstellbar sind.

23. Werkzeug nach einem der Ansprüche 5 bis 22,
**dadurch gekennzeichnet, daß** das Verstellelement (93) von einem Sperrad (99) umgeben ist.

24. Werkzeug nach Anspruch 23,
**dadurch gekennzeichnet, daß** das Sperrad (99) und das Verstellelement (93) über eine Einrichtung zur Umsetzung von Längs- in Drehbewegung, vorzugsweise ein Bewegungssteilgewinde (97, 98), miteinander verbunden sind.

25. Werkzeug nach Anspruch 23 oder 24,
**dadurch gekennzeichnet, daß** das Sperrad (99) am Umfang mit einer Klinkenverzahnung (115) versehen ist, in die wenigstens ein Rastbolzen (114) eingreift.

26. Werkzeug nach Anspruch 25,
**dadurch gekennzeichnet, daß** die Klinkenverzahnung (115) des Sperrades (99) und die Klinkenverzahnung (110) des Schraubelementes (104) in entgegengesetzten Drehrichtungen wirksam sind.

27. Werkzeug nach Anspruch 25,
**dadurch gekennzeichnet, daß** das Sperrad (99) und das Schraubelement (104) durch eine Freilaufkupplung verbunden sind.

28. Werkzeug nach einem der Ansprüche 1 bis 27,
**dadurch gekennzeichnet, daß** das Werkzeug zur Vermessung der fertigen Bohrung wenigstens eine Meßeinrichtung (125) aufweist.

29. Werkzeug nach Anspruch 28,
**dadurch gekennzeichnet, daß** die Meßeinrichtung (125) wenigstens eine Meßdüse (126) aufweist, die an eine Druckluftbohrung (128) angeschlossen ist.

30. Werkzeug nach Anspruch 29,
**dadurch gekennzeichnet, daß** die Meßdüse (126) in einen Aufnahmeraum (129) einer fliehkraftgesteuerten weiteren Wippe (130) ragt.

31. Werkzeug nach Anspruch 30,
**dadurch gekennzeichnet, daß** bei der Arbeitsdrehzahl (n_{Bearbeitung}) des Werkzeuges die fliehkraftgesteuerte weitere Wippe (130) die Meßdüse (126) verschließt.

32. Werkzeug nach Anspruch 30 oder 31,
**dadurch gekennzeichnet, daß** die weitere fliehkraftgesteuerte Wippe (130) zur Einstellung eines Meßspaltes (s) zwischen einer Meßfläche (145) der Wippe (130) und der Bohrungswandung (143) mit einem Einstellelement (136), vorzugsweise einer Einstellschraube, versehen ist.

33. Werkzeug nach einem der Ansprüche 1 bis 32,
**dadurch gekennzeichnet, daß** das Werkzeug mit Angriffsmitteln (89) für einen Werkzeuggreifer zum automatischen Werkzeugwechsel ausgerüstet ist.

34. Verfahren zur Bearbeitung von Bohrungen mit einem Werkzeug nach einem der Ansprüche 1 bis 33,
**dadurch gekennzeichnet, daß** in mindestens zwei NC-Achsen bahngesteuert eine Zylinderbohrung (85) erzeugt wird.

35. Verfahren nach Anspruch 34,
**dadurch gekennzeichnet, daß** in drei NC-Achsen bahngesteuert die Zylinderbohrung (85) erzeugt wird.

36. Verfahren nach Anspruch 34 oder 35,
**dadurch gekennzeichnet, daß** unmittelbar benachbarte Bohrungen (85) an einem Werkstück (87) mehrspindlig bearbeitet werden.

37. Verfahren nach einem der Ansprüche 34 bis 36,
**dadurch gekennzeichnet, daß** das Werkzeug am Ende der Be-arbeitung eine bestimmte Drehlage einnimmt, derart, daß der Radius der maßerzeugenden Werkzeugschneide (13) in Richtung einer NC-Achse liegt und die Schneide (13) durch Bewegung in dieser Achse von der Bohrungswandung abgehoben wird.

## Claims

1. Tool having a base body on which at least one cutter holder, preferably a rocker-type cutter holder, is mounted such that it can be adjusted transversely with respect to the axis of the tool, carries a cutter and rests via a pressure piece on a control chamfer, which is provided on a control sleeve which is mounted in the base body such that it can be displaced axially by pressure force, **characterized in that** the movement of the cutter holder (35) for readjusting the cutter is controlled by at least one centrifugal force-actuated element (44, 66) which is mounted in the base body (1) such that it can be adjusted under centrifugal force at a rotational speed (n₁) which is lower than the working speed (n_{work}) of the tool.

2. Tool according to Claim 1, **characterized in that** the centrifugal force-actuated element (44, 66) initiates a specific rotation of a screw element (17, 104) relative to a control rod (5), on which the control sleeve (23) is mounted.

3. Tool according to Claim 2, **characterized in that** the screw element (17, 104) and the control rod (5) are connected to each other by screw threads (15, 16; 15, 106).

4. Tool according to Claim 2 or 3, **characterized in that** the screw element (17, 104) is located coaxially with the control rod (5).

5. Tool according to one of Claims 2 to 4, **characterized in that** the screw element (17, 104) can be rotated about its axis by the centrifugal force-actuated element (44).

6. Tool according to one of Claims 1 to 5, **characterized in that** the centrifugal force-actuated element (44) can be adjusted radially outward by centrifugal force counter to spring force.

7. Tool according to one of Claims 2 to 6, **characterized in that** the centrifugal force-actuated element (44) has toothing (45) which engages with toothing (18) on the periphery of the screw element (17).

8. Tool according to one of Claims 2 to 7, **characterized in that** by rotating the screw element (17, 104) relative to the control rod (5), the axial distance between the control chamfer (32) and a stop (22, 123), fixed to the tool, for the screw element (17, 104) can be set.

9. Tool according to one of Claims 2 to 8, **characterized in that** the screw element (17, 104) is a threaded spindle.

10. Tool according to one of Claims 1 to 9, **characterized in that** the control sleeve (23) is secured against rotation.

11. Tool according to Claim 10, **characterized in that** the control sleeve (23) has at least one groove (30, 30b) for a locking element (29, 82).

12. Tool according to one of Claims 2 to 11, **characterized in that** the screw element (17, 104) is secured against rotation relative to the base body (1) during the machining of the workpiece (87, 127).

13. Tool according to one of Claims 1 to 12, **characterized in that** the supply of pressure medium is controlled by centrifugal force.

14. Tool according to one of Claims 1 to 13, **characterized in that** a pressure medium bore (69) can be closed or opened by the centrifugal force-actuated element (66).

15. Tool according to Claim 14, **characterized in that** the centrifugal force-actuated element (66) alternately opens and closes a coolant bore (62) and the pressure medium bore (69).

16. Tool according to Claim 14 or 15, **characterized in that** in order to adjust the centrifugal force-actuated element (66) under centrifugal force, a speed (n₃) of the tool is needed which lies between the speed (n₁) for adjusting the centrifugal force-actuated element (44) acting on the screw element (17), and the working speed (n_{work}) of the tool.

17. Tool according to one of Claims 1 to 16, **characterized in that** a centrifugal force-controlled adjusting element (80) acts on a rocker (35b), said element being adjustable at a speed (n₂) which lies between the speed (n₁) for actuating the centrifugal force-actuated element (44) and the speed (n₃) for adjusting the centrifugal force-actuated element (66) for closing or opening the pressure medium bore (69).

18. Tool according to Claim 17, **characterized in that** the centrifugal force-controlled adjusting element (80) is accommodated in a radial holder (81) in the base body (1).

19. Tool according to one of Claims 1 to 18, **characterized in that** the screw element (104) has ratchet toothing (110), in which at least one latching pin (111) engages.

20. Tool according to one of Claims 5 to 19, **characterized in that** the screw element (104) projects into the adjusting element (93).

21. Tool according to Claim 20, **characterized in that** the screw element (104) and the adjusting element (93) are positively connected to each other in the peripheral direction.

22. Tool according to Claim 20 or 21, **characterized in that** the screw element (104) and the adjusting element (93) are adjustable axially relative to each other.

23. Tool according to one of Claims 5 to 22, **characterized in that** the adjusting element (93) is enclosed by a ratchet wheel (99).

24. Tool according to Claim 23, **characterized in that** the ratchet wheel (99) and the adjusting element (93) are connected to each other by a device for converting longitudinal movement into rotary movement, preferably a steep-angle transmission thread (97, 98).

25. Tool according to Claim 23 or 24, **characterized in that** the periphery of the ratchet wheel (99) is provided with ratchet toothing (115), in which at least one latching pin (114) engages.

26. Tool according to Claim 25, **characterized in that** the ratchet toothing (115) of the ratchet wheel (99) and the ratchet toothing (110) of the screw element (104) are effective in opposite directions of rotation.

27. Tool according to Claim 25, **characterized in that** the ratchet wheel (99) and the screw element (104) are connected by a freewheel clutch.

28. Tool according to one of Claims 1 to 27, **characterized in that** the tool has at least one measuring device (125) for measuring the finished bore.

29. Tool according to Claim 28, **characterized in that** the measuring device (125) has at least one measuring nozzle (126), which is connected to a compressed air bore (128).

30. Tool according to Claim 29, **characterized in that** the measuring nozzle (126) projects into a mounting space (129) of a further centrifugal force-controlled rocker (130).

31. Tool according to Claim 30, **characterized in that** at the working speed (n_{work}) of the tool, the further centrifugal force-controlled rocker (130) closes the measuring nozzle (126).

32. Tool according to Claim 30 or 31, **characterized in that** the further centrifugal force-controlled rocker (130) is provided with a setting element (136), preferably a setting screw, for setting a measuring gap (s) between a measuring face (145) of the rocker (130) and the wall (143) of the bore.

33. Tool according to one of Claims 1 to 32, **characterized in that** the tool is equipped with engagement means (89) for a tool gripper for automatic tool changing.

34. Method of machining bores with a tool according to one of Claims 1 to 33, **characterized in that** a cylinder bore (85) is produced under track control in at least two NC axes.

35. Method according to Claim 34, **characterized in that** the cylinder bore (85) is produced under track control in three NC axes.

36. Method according to Claim 34 or 35, **characterized in that** directly adjacent bores (85) on a workpiece (87) are machined using multiple spindles.

37. Method according to one of Claims 34 to 36, **characterized in that** at the end of machining, the tool assumes a specific rotary position such that the radius of the tool cutter (13) which defines the dimension lies in the direction of one NC axis, and the cutter (13) is lifted off the wall of the bore by being moved in this axis.

## Revendications

1. Outil comprenant un corps de base sur lequel est monté au moins un porté couteau de préférence une bascule, réglable transversalement à l'axe de l'outil, portant un couteau et s'appuyant par l'intermédiaire d'un poussoir contre une rampe de commande prévue sur un manchon de réglage monté coulissant axialement sous l'action d'une force de poussée, dans le corps de base,
**caractérisé en ce que**
le mouvement du porte-couteau (35) après réglage du couteau est commandé par au moins un élément (44, 66) actionné par la force centrifuge qui, pour une vitesse de rotation (n₁) inférieure à la vitesse de rotation de travail (nₜᵣₐᵥ), de l'outil est monté de manière réglable dans le corps de base (1) sous l'effet de la force centrifuge.

2. Outil selon la revendication 1,
**caractérisé en ce que**
l'élément (44, 66) soumis à la force centrifuge déclenche une rotation voulue d'un élément de vis (17, 104) par rapport à une tige de réglage (5) sur laquelle est monté le manchon de réglage (23).

3. Outil selon la revendication 2,
**caractérisé en ce que**
l'élément de vis (17, 104) et la tige de réglage (5) sont reliés par un filetage (15, 16 ; 15, 106).

4. Outil selon l'une quelconque des revendications 2 ou 3,
**caractérisé en ce que**
l'élément de vis (17, 104) est coaxial à la tige de réglage (5).

5. Outil selon l'une quelconque des revendications 2 à 4,
**caractérisé en ce que**
l'élément de vis (17, 104) est monté à rotation autour de son axe par l'élément (44) actionné par la force centrifuge.

6. Outil selon l'une quelconque des revendications 1 à 5,
**caractérisé en ce que**
l'élément actionné (44) actionné par la force centrifuge est réglable radialement vers l'extérieur par la force centrifuge contre l'action d'un ressort.

7. Outil selon l'une quelconque des revendications 2 à 6,
**caractérisé en ce que**
l'élément (44) actionné par la force centrifuge comporte une denture (45) en prise avec une denture (18) à la périphérie de l'élément de vis (17).

8. Outil selon l'une quelconque des revendications 2 à 7,
**caractérisé en ce qu'**
en tournant l'élément de vis (17, 104) par rapport à la tige de réglage (5), on règle la distance axiale entre la rampe de commande (32) et une butée (22, 123) solidaire de l'outil pour l'élément de vis (17, 104).

9. Outil selon l'une quelconque des revendications 2 à 8,
**caractérisé en ce que**
l'élément de vis (17, 104) est une broche filetée.

10. Outil selon l'une quelconque des revendications 1 à 9,
**caractérisé en ce que**
le manchon de réglage (23) est bloqué en rotation.

11. Outil selon la revendication 10,
**caractérisé en ce que**
le manchon de réglage (23) comporte au moins une rainure (30, 30b) pour un élément de verrouillage (29, 82).

12. Outil selon l'une quelconque des revendications 2 à 11,
**caractérisé en ce que**
l'élément de vis (17, 104) est bloqué en rotation par rapport au corps de base (1) pendant l'usinage de la pièce (87, 127).

13. Outil selon l'une quelconque des revendications 1 à 12,
**caractérisé en ce que**
l'alimentation en fluide sous pression est commandée par la force centrifuge.

14. Outil selon l'une quelconque des revendications 1 à 13,
**caractérisé en ce que**
l'élément (66) actionné par la force centrifuge commande la fermeture ou l'ouverture d'un perçage de fluide sous pression (69).

15. Outil selon la revendication 14,
**caractérisé en ce que**
l'élément (66) actionné par la force centrifuge commande l'ouverture ou la fermeture alternée d'un perçage de liquide de refroidissement (62) et d'un perçage de fluide de pression (69).

16. Outil selon l'une quelconque des revendications 14 ou 15,
**caractérisé en ce que**
pour régler l'élément (66) actionné par la force centrifuge, il faut pour la force centrifuge une vitesse de rotation (n₃) de l'outil comprise entre la vitesse de rotation (n₁) pour régler l'élément (44) commandé par la force centrifuge et qui agit sur l'élément de vis (17) et la vitesse de rotation de travail (nₜᵣₐᵥ) de l'outil.

17. Outil selon l'une quelconque des revendications 1 à 16,
**caractérisé en ce qu'**
une bascule (35b) est soumise à l'action d'un élément de réglage (80) commandé par la force centrifuge et qui est réglable pour une vitesse de rotation (n₂) comprise entre la vitesse de rotation (n₁) pour l'actionnement de l'élément (44) actionné par la force centrifuge et la vitesse de rotation (n₃) pour régler l'élément (66) actionné par la force centrifuge, pour fermer ou libérer le perçage de fluide sous pression (69).

18. Outil selon la revendication 17,
**caractérisé en ce que**
l'élément (80) commandé par la force centrifuge est prévu dans un logement radial (81) du corps de base (1).

19. Outil selon quelconque des revendications 1 à 18,
**caractérisé en ce que**
l'élément de vis (104) comporte une denture à cliquet (110) qui pénètre dans au moins un goujon d'encliquetage (111).

20. Outil selon l'une quelconque des revendications 5 à 19,
**caractérisé en ce que**
l'élément de vis (104) pénètre dans l'élément de réglage (93).

21. Outil selon la revendication 20,
**caractérisé en ce que**
l'élément de vis (104) et l'élément de réglage (93) sont reliés l'un à l'autre dans la direction périphérique par une liaison par la forme.

22. Outil selon l'une quelconque des revendications 20 ou 21,
**caractérisé en ce que**
l'élément de vis (104) et l'élément de réglage (93) sont réglables axialement l'un par rapport à l'autre.

23. Outil selon l'une quelconque des revendications 5 à 22,
**caractérisé en ce que**
l'élément de réglage (93) est entouré par une roue de blocage (99).

24. Outil selon la revendication 23,
**caractérisé en ce que**
la roue de blocage (99) et l'élément de réglage (93) sont reliés l'un à l'autre par une installation de conversion du mouvement longitudinal en mouvement de rotation, de préférence un filetage à pas rapide (97, 98) d'entraînement.

25. Outil selon l'une quelconque des revendications 23 ou 24,
**caractérisé en ce que**
la roue de blocage (99) comporte à sa périphérie une denture à cliquet (115) dans laquelle pénètre au moins un goujon d'encliquetage (114).

26. Outil selon la revendication 25,
**caractérisé en ce que**
la denture à cliquet (115) de la roue de blocage (99) et la denture à cliquet (110) de l'élément de vis (104) agissent dans des sens de rotation opposés.

27. Outil selon la revendication 25,
**caractérisé en ce que**
la roue de blocage (99) et l'élément de vis (104) sont reliés par un embrayage à roue libre.

28. Outil selon l'une quelconque des revendications 1 à 27,
**caractérisé en ce que**
l'outil comporte au moins une installation de mesure (125) pour mesurer le perçage terminé.

29. Outil selon la revendication 28,
**caractérisé en ce que**
l'installation de mesure (125) comporte au moins une buse de mesure (126) reliée à un perçage d'air comprimé (128).

30. Outil selon la revendication 29,
**caractérisé en ce que**
la buse de mesure (126) pénètre dans un logement (129) d'une autre bascule (130) commandée par la force centrifuge.

31. Outil selon la revendication 30,
**caractérisé en ce que**
pour la vitesse de rotation de travail (nₜᵣₐᵥ), de l'outil, l'autre bascule (130) commandée par la force centrifuge ferme la buse de mesure (126).

32. Outil selon les revendications 30 ou 31,
**caractérisé en ce que**
l'autre bascule commandée par la force centrifuge (130) pour régler un intervalle de mesure (s) entre la surface de mesure (145) de la bascule (130) et la paroi de perçage (143) comporte un élément de réglage (136) de préférence une vis de réglage.

33. Outil selon l'une quelconque des revendications 1 à 32,
**caractérisé en ce qu'**
il est équipé de moyens de prise (89) pour un outil pour permettre le changement automatique de l'outil.

34. Procédé d'usinage de perçage à l'aide d'un outil selon l'une quelconque des revendications 1 à 33,
**caractérisé en ce que**
par commande de trajectoire, on réalise un perçage cylindrique (85) selon au moins deux axes NC (à commande numérique).

35. Procédé selon la revendication 34,
**caractérisé en ce qu'**
on réalise le perçage cylindrique (85) par une commande de trajectoire selon trois axes NC.

36. Procédé selon l'une quelconque des revendications 34 et 35,
**caractérisé en ce que**
l'on usine avec plusieurs broches une pièce (87) avec des perçages (85) directement voisins.

37. Procédé selon l'une quelconque des revendications 34 à 36,
**caractérisé en ce qu'**
à la fin de l'usinage, l'outil prend une certaine position de rotation de façon que le rayon du couteau (13) de l'outil, qui crée la mesure, soit situé en direction d'un axe NC que le couteau (13) puisse se dégager de la paroi du perçage par déplacement dans cet axe.
